# EUROPEAN PATENT APPLICATION

(11) **EP 4 832 646 A1**
(43) Date of publication of application: **28.10.2026**
(21) Application number: 24906250.6
(22) Date of filing: 13.12.2024
(51) Int. Cl.: H04W 74/0833

(54) **RANDOM ACCESS METHOD, COMMUNICATION METHOD, APPARATUS, AND DEVICE**

(30) Priority: 19.12.2023 CN 202311764474
(71) Applicant: Vivo Mobile Communication Co., Ltd., Dongguan, Guangdong 523863 (CN)
(72) Inventor: JIANG, Lu, Dongguan, Guangdong 523863 (CN); LI, Gen, Dongguan, Guangdong 523863 (CN); PAN, Xueming, Dongguan, Guangdong 523863 (CN)
(74) Representative: Walaski, Jan Filip
(86) International application number: PCT/CN2024/139114
(87) International publication number: WO 2025/130769

(57) **Abstract**

This application discloses a random access method and apparatus, a communication method and apparatus, and a device, and relates to the technical field of communications. The random access method disclosed in an embodiment of this application includes: receiving, by a terminal, first information about a second access object group transmitted by a network-side device via a first access object, where the second access object group includes one or more second access objects different from the first access object; and selecting, by the terminal, a target access object to perform a first operation from the first access object and the second access object group based on the first information and a first rule, where the first operation includes camping or random access, and the access object includes one of a carrier, a cell, or a bandwidth part BWP.

## Description

### CROSS-REFERENCE

This application claims priority to Chinese Patent Application No. 202311764474.9, filed with the China National Intellectual Property Administration on December 19, 2023 and entitled "RANDOM ACCESS METHOD AND APPARATUS, COMMUNICATION METHOD AND APPARATUS, AND DEVICE", the entire contents of which are incorporated herein by reference.

### TECHNICAL FIELD

This application relates to the technical field of communications, and specifically relates to a random access method and apparatus, a communication method and apparatus, and a device.

### BACKGROUND

To increase a network-side capacity, multiple access objects such as multiple carriers (multi-carriers) or multiple cells are introduced on the network side, and a user equipment (User Equipment, UE) may randomly access one of the multiple access objects. Taking multiple carriers or multiple cells as an example, if the UE wants to randomly access a carrier/cell, the UE needs to first obtain a synchronization signal/physical broadcast channel block (Synchronization Signal/Physical Broadcast Channel block, SSB) transmitted on the carrier/cell to obtain time-frequency synchronization. If the UE wants to initiate random access on a carrier/cell, the UE needs to first obtain a system information block 1 (System Information Block 1, SIB) of the carrier/cell, because the SIB1 includes a RACH configuration.

To reduce energy consumption on the network side, a carrier/cell may not transmit an SSB/SIB, or perform RACH monitoring. However, if no SSB is transmitted on a carrier/cell and no carrier/cell is configured as a synchronization reference for the carrier/cell, the carrier/cell cannot allow the UE to perform random access. If no SIB is transmitted on a carrier/cell and the UE does not obtain the SIB of the carrier from the remaining carriers/cells, the UE cannot obtain a RACH configuration for the carrier/cell, and random access can then be performed only on a carrier/cell with a RACH configuration, which causes excessive load on a carrier/cell that allows random access. If no RACH monitoring is performed on a carrier/cell, a UE in an idle state cannot perform random access on the carrier/cell, which also causes a decrease in the network-side capacity.

Therefore, in a multi-access-object scenario, how to implement random access for a UE so that the network-side capacity is maximized as much as possible while saving energy for the network-side device is still an urgent technical problem to be resolved.

### SUMMARY

Embodiments of this application provide a random access method and apparatus, a communication method and apparatus, and a device, to maximize network energy savings as much as possible while ensuring a network-side capacity.

According to a first aspect, a random access method is provided. The method includes:
receiving first information about a second access object group transmitted by a network-side device via a first access object, where the second access object group includes one or more second access objects different from the first access object; and
selecting a target access object to perform a first operation from the first access object and the second access object group based on the first information and a first rule, where the first operation includes camping or random access, and the access object includes one of a carrier, a cell, or a bandwidth part BWP.

According to a second aspect, a communication method is provided. The method includes:
transmitting first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP.

According to a third aspect, a random access apparatus is provided. The apparatus includes:
an information receiving module, configured to receive first information about a second access object group transmitted by a network-side device via a first access object, where the second access object group includes one or more second access objects different from the first access object; and
an access object selection module, configured to select a target access object to perform a first operation from the first access object and the second access object group based on the first information and a first rule, where the first operation includes camping or random access, and the access object includes one of a carrier, a cell, or a bandwidth part BWP.

According to a fourth aspect, a communication apparatus is provided. The apparatus includes:
an information transmitting module, configured to transmit first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP.

According to a fifth aspect, a terminal is provided. The terminal includes a processor and a memory. The memory stores a program or instructions executable on the processor, and the program or the instructions, when executed by the processor, implement the steps of the method according to the first aspect.

According to a sixth aspect, a terminal is provided. The terminal includes a processor and a communication interface, where the communication interface is configured to receive first information about a second access object group transmitted by a network-side device via a first access object, where the second access object group includes one or more second access objects different from the first access object; and the processor is configured to select a target access object to perform a first operation from the first access object and the second access object group based on the first information and a first rule, where the first operation includes camping or random access, and the access object includes one of a carrier, a cell, or a bandwidth part BWP.

According to a seventh aspect, a network-side device is provided. The network-side device includes a processor and a memory. The memory stores a program or instructions executable on the processor, and the program or the instructions, when executed by the processor, implement the steps of the method according to the second aspect.

According to an eighth aspect, a network-side device is provided. The network-side device includes a processor and a communication interface, where the communication interface is configured to transmit first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP.

According to a ninth aspect, a communication system is provided. The communication system includes a terminal and a network-side device, where the terminal may be configured to perform the steps of the random access method according to the first aspect, and the network-side device may be configured to perform the steps of the random access method according to the second aspect.

According to a tenth aspect, a readable storage medium is provided. The readable storage medium has a program or instructions stored thereon, and the program or the instructions, when executed by a processor, implement the steps of the method according to the first aspect or the steps of the method according to the second aspect.

According to an eleventh aspect, a chip is provided. The chip includes a processor and a communication interface. The communication interface is coupled to the processor. The processor is configured to execute a program or instructions to implement the method according to the first aspect or the method according to the second aspect.

According to a twelfth aspect, a computer program/program product is provided. The computer program/program product is stored in a storage medium, and the computer program/program product is executed by at least one processor to implement the steps of the method according to the first aspect or the second aspect.

In embodiments of this application, the network-side device provides the first information about the second access object group to the terminal via the first access object, so that the terminal can select a target access object to perform camping or random access from the first access object and the second access object group based on the first information and the first rule, eliminating the need for continuous transmission of information such as an SSB and SIB on the second access object. Therefore, the network-side capacity can be maximized as much as possible while saving energy on the network side.

### BRIEF DESCRIPTION OF DRAWINGS

FIG. 1 is a block diagram of a wireless communication system according to an embodiment of this application;
FIG. 2 is a schematic flowchart of a random access method according to an embodiment of this application;
FIG. 3 is a schematic flowchart of a random access method according to another embodiment of this application;
FIG. 4 is a schematic flowchart of a random access method according to another embodiment of this application;
FIG. 5 is a schematic flowchart of a random access method according to another embodiment of this application;
FIG. 6 is a schematic diagram of a random access procedure according to an embodiment of this application;
FIG. 7 is a schematic diagram of a random access procedure according to another embodiment of this application;
FIG. 8 is a schematic flowchart of a communication method according to an embodiment of this application;
FIG. 9 is a schematic structural diagram of a random access apparatus according to an embodiment of this application;
FIG. 10 is a schematic structural diagram of a random access apparatus according to another embodiment of this application;
FIG. 11 is a schematic structural diagram of a random access apparatus according to another embodiment of this application;
FIG. 12 is a schematic structural diagram of a random access apparatus according to another embodiment of this application;
FIG. 13 is a schematic structural diagram of a communication apparatus according to an embodiment of this application;
FIG. 14 is a schematic structural diagram of a communication device according to this application;
FIG. 15 is a schematic diagram of a hardware structure of a terminal according to an embodiment of this application; and
FIG. 16 is a schematic diagram of a hardware structure of a network-side device according to an embodiment of this application.

### DESCRIPTION OF EMBODIMENTS

Technical solutions in embodiments of this application are clearly described below with reference to the accompanying drawings in embodiments of this application. It is clear that, the embodiments described are merely some rather than all of embodiments of this application. Based on embodiments of this application, each other embodiment obtained by a person of ordinary skill in the art falls within the scope of protection of this application.

The terms "first", "second", and the like in the specification and claims of this application are intended to distinguish between similar objects, and not necessarily to indicate a specific order or sequence. It should be understood that terms used in such a way are interchangeable as appropriate, so that embodiments of this application can be implemented in an order other than that illustrated or described herein. Moreover, the terms "first" and "second" typically distinguish between objects of one category without limiting the number of objects. For example, a first object may be one or more objects. In addition, "and/or" in the specification and claims represents at least one of the connected objects, and the character "/" generally represents an "or" relationship between the associated objects.

It should be noted that, a technology described in embodiments of this application is not limited to a long term evolution (Long Term Evolution, LTE)/LTE-advanced (LTE-Advanced, LTE-A) system, and may also be used in other wireless communication systems, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. The terms "system" and "network" in embodiments of this application are often used interchangeably. The technology described may be used in the systems and radio technologies described above, as well as other systems and radio technologies. A new radio (New Radio, NR) system is described below for illustrative purposes, and NR terms are used in most of the following descriptions. However, these technologies may also be used in applications other than NR system applications, for example, in a 6th generation (6^{th} Generation, 6G) communication system.

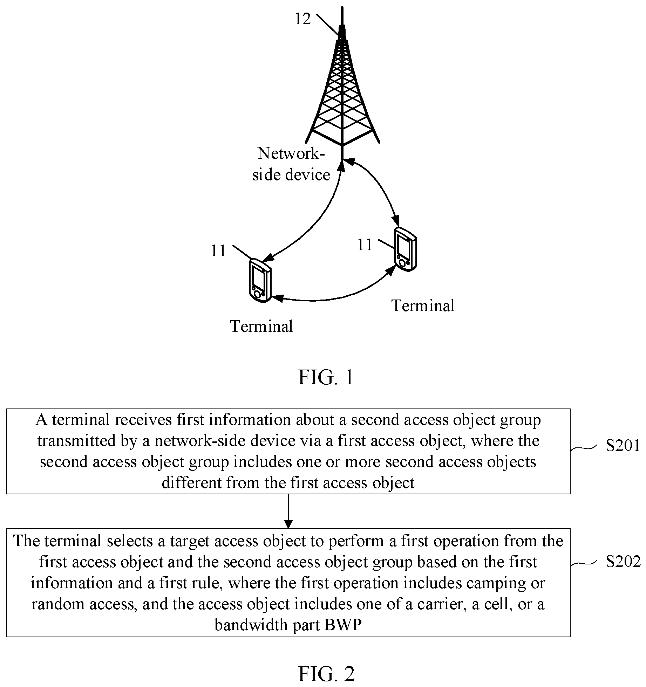

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (VUE), a pedestrian user equipment (PUE), a smart home (a home device with a wireless communication function, such as a refrigerator, a television, a washing machine, or furniture), a game console, a personal computer (personal computer, PC), an automated teller machine, or a self-service machine. The wearable device includes a smart watch, a smart band, smart headphones, smart glasses, smart jewelry (such as a smart bangle, a smart bracelet, a smart ring, a smart necklace, a smart ankle bangle, or a smart ankle bracelet), a smart wriststrap, a smart dress, or the like. It should be noted that a specific type of the terminal 11 is not limited in embodiments of this application. The network-side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the art. Provided that the same technical effects are achieved, the base station is not limited to a specific technical term. It should be noted that in embodiments of this application, a base station in an NR system is merely used as an example for description, and a specific type of the base station is not limited.

To maximize the network-side capacity as much as possible while saving energy on the network side, embodiments of this application provide a random access method and apparatus, and a terminal, as well as a communication method and apparatus, and a network-side device. Detailed description is provided below with reference to the accompanying drawings.

First, a random access method provided in an embodiment of this application is described.

As shown in FIG. 2, an embodiment of this application provides a random access method. The method may include the following steps.

Step 201: A terminal receives first information about a second access object group transmitted by a network-side device via a first access object, where the second access object group includes one or more second access objects different from the first access object.

The access object may include one of a carrier (carrier), a cell (Cell), or a bandwidth part (Bandwidth Part, BWP). The random access method provided in this embodiment of this application is directed to a multi-access-object scenario, which is illustrated below primarily through the example of a multi-carrier scenario.

In an implementation, in the multi-carrier scenario, the first access object may be an anchor carrier (anchor carrier), and the second access object may be a non-anchor carrier (non-anchor carrier). On the anchor carrier, a UE can obtain system information (system information) of the anchor carrier and necessary system information (necessary system information) of other non-anchor carriers. Moreover, the UE may perform at least one of random access (Random Access Channel, RACH), data transmission, or data reception on any anchor carrier or non-anchor carrier based on the system information obtained from the anchor carrier.

In another implementation, in the multi-carrier scenario, the first access object may be a carrier with normal SSB transmission, the second access object may be a carrier with no SSB transmission (SSB-less carrier), or the second access object may be a carrier with on-demand SSB transmission (on-demand SSB carrier).

In this embodiment of this application, the SSB includes at least one of a synchronization signal block (Synchronization Signal Block, SSB) or a physical broadcast channel block (Physical Broadcast Channel block).

The random access method provided in this embodiment of this application is applicable to a scenario in which the network-side device does not configure a system information block SIB of the second access object on the first access object or configures only a partial SIB thereon (that is, the first information does not include the system information block SIB of the second access object or includes only the partial SIB of the second access object). These scenarios may include the following:

Scenario 1: Wake-up signal (wake-up signal, WUS) configuration information that triggers SIB transmission on each second access object in the second access object group is configured on the first access object. On all the second access objects in the second access object group, normal SSB transmission and normal RACH monitoring (monitoring) are performed, but no SIB1 transmission is performed (the SIB1 transmission needs to be triggered by a WUS).

Scenario 2: WUS configuration information that triggers SIB transmission on each second access object in the second access object group is configured on the first access object. On all the second access objects in the second access object group, no SSB transmission is performed, and normal RACH monitoring is performed with the first access object as a reference access object, and no SIB1 transmission is performed (the SIB1 transmission needs to be triggered by a WUS).

Scenario 3: WUS configuration information that triggers SSB and SIB1 transmissions on the second access object group is configured on the first access object. On all the second access objects in the second access object group, no SSB transmission is performed, normal RACH monitoring is performed, and no SIB1 transmission is performed (the SIB1 transmission needs to be triggered by a WUS).

Scenario 4: WUS configuration information that triggers SIB1 transmission and RACH monitoring on the second access object group is configured on the first access object. On all the second access objects in the second access object group, SSB transmission is or is not performed (with the first access object as a reference access object), normal RACH monitoring is not performed, and no SIB1 transmission is performed (the SIB1 transmission needs to be triggered by a WUS).

Scenario 5: WUS configuration that triggers SSB and SIB1 transmissions and RACH monitoring on the second access object group is configured on the first access object. On all the second access objects in the second access object group, no SSB transmission is performed, no normal RACH monitoring is performed, and no SIB1 transmission is performed (the SIB1 transmission needs to be triggered by a WUS).

The first information may be transmitted by the first access object via a broadcast message. Alternatively, the first information is by default the same as information corresponding to the first access object.

The first information corresponds to at least one second access object in the second access object group, and the first information may include at least one of the following:
1) wake-up signal WUS configuration information that triggers SSB transmission on the at least one second access object, or WUS configuration information that triggers SSB adaptation for the at least one second access object, where the SSB includes at least one of a synchronization signal block or a physical broadcast channel block;
2) WUS configuration information that triggers SIB transmission on the at least one second access object, or WUS configuration information that triggers SIB adaptation for the at least one second access object;
3) WUS configuration information that triggers random access channel RACH monitoring for the at least one second access object, or WUS configuration information that triggers RACH monitoring adaptation for the at least one second access object;
4) relevant configuration information of an SSB currently transmitted on the at least one second access object, which may include at least one of the following:
   whether an SSB is currently transmitted on the at least one second access object;
   at least one of a frequency of an SSB that is being transmitted on the at least one second access object, an SSB transmission periodicity, or the number of SSBs within one transmission periodicity; and
   a transmission mode of an SSB that is being transmitted on the at least one second access object, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
5) relevant configuration information of an SIB currently transmitted on the at least one second access object, which may include at least one of the following:
   whether an SIB is transmitted on the at least one second access object;
   a transmission periodicity of an SIB that is being transmitted on the at least one second access object;
   configuration information of at least one of a physical downlink control channel PDCCH and a control resource set associated with an SIB that is being transmitted on the at least one second access object; and
   a transmission mode of an SIB that is being transmitted on the at least one second access object, where the transmission mode includes one of a normal transmission mode, an energy-saving transmission mode, a consolidated (compact) transmission mode, a long-periodicity transmission mode (with a longer SIB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SIB1s;
6) relevant configuration information of a RACH monitoring behavior currently occurring on the at least one second access object, which may include at least one of the following:
   whether RACH monitoring is performed on the at least one second access object;
   at least one of a transmission periodicity of a RACH currently monitored on the at least one second access object, the number of RACHs within one transmission periodicity, RACH frequency domain resource configuration information, or RACH time domain resource configuration information; and
   a monitoring mode of RACH monitoring on the at least one second access object, where the monitoring mode includes one of a normal monitoring mode, a reduced monitoring mode (for example, reduced RO transmission opportunities (reduced RO opportunity)), a consolidated monitoring mode, or an on-demand (on-demand) monitoring mode, where the reduced monitoring mode may include reduced RO transmission opportunities (reduced RO opportunity), the consolidated monitoring mode may be a monitoring mode in which no time-domain interval (gap) exists between a plurality of ROs, and RO is the abbreviation for physical random access channel occasion (PRACH Occasion);
7) relevant configuration information of an SSB transmitted after successful triggering by a WUS, which may include at least one of the following:
   at least one of a frequency of an SSB transmitted on the at least one second access object after successful triggering by a WUS, an SSB transmission periodicity, or the number of SSBs within one transmission periodicity;
   a monitoring window for an SSB transmitted on the at least one second access object after successful triggering by a WUS, that is, the UE monitors an SSB within the monitoring window;
   at least one time domain resource index or at least one time domain resource position of an SSB actually transmitted on the at least one second access object after successful triggering by a WUS;
   at least one of a transmission duration of an SSB transmitted on the at least one second access object after successful triggering by a WUS, the number of SSB transmissions, or the number of SSB transmission periods;
   a relative relationship between an SSB transmitted on the at least one second access object after successful triggering by a WUS and an SSB transmitted on the first access object in at least one of a time domain, a frequency domain, or a space domain;
   a time domain resource position of a first SSB or a first SIB transmitted on the at least one second access object after successful triggering by a WUS, for example, transmission is performed in the nearest SSB periodicity after X slots/symbols from the transmission time of the WUS; and
   a transmission mode of SSB transmission on the at least one second access object after successful triggering by a WUS, where the transmission mode includes one of a normal transmission mode, an energy-saving transmission mode (for example, transmitting only a PSS and an SSS), a consolidated transmission mode (for example, no time-domain interval exists between a plurality of SSBs), a long-periodicity transmission mode (with a relatively long SSB periodicity), or an on-demand (on-demand) transmission mode;
8) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
9) relevant configuration information of RACH monitoring after successful triggering by a WUS, which may include:
   at least one of a periodicity of RACH monitoring on the at least one second access object after successful triggering by a WUS, the number of RACHs to be monitored, frequency domain resource configuration information for the RACH monitoring, time domain resource configuration information for the RACH monitoring, or a monitoring mode of the RACH monitoring, where the monitoring mode includes one of a normal monitoring mode, a reduced monitoring mode (for example, reduced RO opportunities), a consolidated monitoring mode (no time-domain interval exists between a plurality of ROs), or an on-demand monitoring mode; and
10) characteristic information of the at least one second access object, which may include at least one of the following:
   identifier information of the at least one second access object;
   whether the at least one second access object can use the first access object as a reference access object;
   whether the at least one second access object is co-located (co-located) with the first access object;
   whether the at least one second access object is located in the same timing advance group (Timing Advance Group, TAG) as the first access object;
   whether the at least one second access object has a quasi co-location (Quasi Co-Location, QCL) relationship with the first access object;
   a reference access object for the at least one second access object;
   an access object co-located with the at least one second access object;
   an access object located in the same TAG as the at least one second access object;
   an access object having a QCL relationship with the at least one second access object;
   whether the at least one second access object is in a barring status;
   a priority of the at least one second access object when the UE performs random access channel selection;
   whether the at least one second access object is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second access object; for example, a UE for which (UE ID mod carrier number) = N can perform random access on the carrier;
   whether the at least one second access object supports UE camping;
   whether the at least one second access object is a suitable cell (suitable Cell);
   whether the at least one second access object supports cell selection and cell reselection; and
   partial system information of the at least one second access object, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

The WUS configuration information contained in the first information may include at least one of the following:
1) WUS synchronization reference configuration information, which may include at least one of the following:
   at least one of an SSB, a channel state information-reference signal (Channel State Information-Reference Signal, CSI-RS), or a tracking reference signal (tracking reference signal, TRS) of the first access object; and
   GPS timing (GPS timing).
2) WUS resource configuration information, which may include at least one of the following:
   time domain resource information;
   frequency domain resource information; and
   signal sequence configuration information, such as preamble grouping, which may indicate a preamble group index indicating that preambles in this group are used to trigger an SSB of the at least one second access object.
3) WUS power configuration information, which may include at least one of the following:
   initial signal power; and
   signal power ramp-up step size.
4) WUS repetition configuration information, which may include at least one of the following:
   repetition count for a single signal transmission; and
   maximum repetition count for channel transmission.
5) WUS spatial domain parameter configuration information, which may include at least one of the following:
   a correspondence between a WUS and an SSB of the first access object;
   a correspondence between a WUS and an SSB of the at least one second access object; and
   a correspondence between a WUS and an SSB of the second access object group.
6) WUS transmission timer (timer) configuration information, where the timer is used to prevent the WUS from being transmitted too frequently; and typically, the timer is started upon completion of the WUS transmission, and repeated transmission of the WUS is not allowed until the timer expires.

A form of the WUS signal includes at least one of the following:
RACH;
Msg1;
preamble sequence (preamble);
sounding reference signal (Sounding Reference Signal, SRS); and
physical uplink control channel (Physical Uplink Control Channel, PUCCH).

A configuration method for the WUS resource configuration information includes at least one of the following:
configuring a signal resource list in the first information, where each element in the signal resource list is in a one-to-one correspondence with an index size of the second access object or the second access object group, and one element in the signal resource list includes one or more resources;
configuring a signal resource list in the first information, where each element in the signal resource list explicitly corresponds to an index of the second access object or the second access object group;
configuring a candidate resource set in the first information, where one or more resources in the candidate resource set correspond to one resource number, one resource number corresponds to an index of one second access object or one second access object group, and the resource number is determined according to at least one of time domain, frequency domain, or space domain; and
configuring one or more signal resources for the second access object or the second access object group in the first information.

The signal resources configured by the WUS resource configuration information include at least one of the following:
time-frequency resources are the same as time-frequency resources of a common RACH on the first access object or the second access object group; that is, same time-frequency resources are shared with the common RACH on the first access object;
time-frequency resources are time-frequency resources of a dedicated RACH specifically used to trigger SSB/SIB transmission and/or RACH monitoring on the first access object or the second access object group, where the time-frequency resources of the dedicated RACH may be time-frequency resources completely different from the time-frequency resources of the common RACH on the first access object, or may be a portion of the time-frequency resources of the common RACH on the first access object; and
time-frequency resources are time-frequency resources of a dedicated SRS/PUCCH used to trigger SSB/SIB transmission and/or RACH monitoring on the first access object or the second access object group.

A grouping method for the second access object group includes at least one of the following:
configured by the network-side device; and
specified by the protocol.

A grouping rule for the second access object group includes at least one of the following:
second access objects within a same frequency band (band) form a group;
second access objects within a same frequency band interval form a group;
second access objects for which at least one of an initial BWP (Initial BWP), an active BWP (active BWP), an SSB, or an SCS is the same form a group;
second access objects with a same transmission mode form a group, where the transmission mode is related to at least one of whether to transmit an SSB, whether to perform RACH monitoring, whether transmission of an on-demand SSB (on-demand SSB) is supported, or the like;
second access objects that are co-located form a group; and
second access objects with a consistent SSB transmission periodicity form a group.

Step 202: Select a target access object to perform a first operation from the first access object and the second access object group based on the first information and a first rule, where the first operation includes camping or random access, and the access object includes one of a carrier, a cell, or a bandwidth part BWP.

The first rule may be related to at least one of the following:
one or more access objects that are indicated or configured by the network-side device and that can be randomly accessed by the terminal;
an access object to be randomly accessed by the terminal being the first access object by default;
barring status information of the second access object;
an index value of the second access object;
a center frequency of the second access object;
a subcarrier spacing (SubCarrier Spacing, SCS) of the second access object;
an identifier of the second access object;
a frequency interval between the second access object and the first access object;
whether normal RACH monitoring is performed on the second access object;
whether normal SSB transmission is performed on the second access object;
whether normal SIB transmission is performed on the second access object;
whether at least two of normal RACH monitoring, normal SSB transmission, or normal SIB transmission being performed on the second access object are satisfied;
a number of required WUS transmissions to the second access object;
a priority of the second access object;
a measurement value of signal strength of a reference signal of the second access object, where the signal strength includes at least one of a reference signal received power (Reference Signal Receiving Power, RSRP) or a signal-to-interference-plus-noise ratio (Signal to Interference plus Noise Ratio, SINR);
a randomly generated access object index;
a weight value of the second access object;
a randomly generated access object weight value;
whether the first access object is a suitable cell; and
whether the second access object is a suitable cell.

The priority of the second access object may be explicitly indicated by the network-side device. Alternatively, the priority of the second access object is related to at least one of the following:
① a transmission mode of the second access object, where the transmission mode includes one of whether normal SSB transmission is performed, whether transmission of an on-demand SSB is supported, or whether normal RACH monitoring is performed. For example, a relationship between the priority of the second access object and the transmission mode may be as follows:
   a priority of a second access object on which normal SSB transmission is performed > a priority of a second access object that uses the first access object as a reference and on which no SSB transmission is performed > a priority of a second access object on which transmission of an on-demand SSB is performed;
   a priority of a second access object on which normal SIB transmission is performed > a priority of a second access object on which transmission of an on-demand SIB is performed; and
   a priority of a second access object on which normal RACH monitoring is performed > a priority of a second access object on which on-demand RACH monitoring is performed;
② a size of a frequency band interval between the second access object and the first access object; and
③ a number of the second access object.

Two examples are provided below to describe how the target access object to perform the first operation is selected from the first access object and the second access object group based on the first information and the first rule in step 202. Other examples may also be involved in the following embodiment, and they are not described here. For details, refer to the following descriptions.

### First example

Selecting the target access object to perform the first operation from the first access object and the second access object group based on the first information and the first rule may include:
determining whether the first access object is a suitable cell; and
in the case that the first access object is a suitable cell, selecting the first access object as the target access object; or
in the case that the first access object is not a suitable cell, performing one of a first step, a second step, or a third step.

The first step includes:
determining whether the at least one second access object is a suitable cell, based on a reference signal measurement result corresponding to the at least one second access object in the second access object group and a system information block SIB transmitted on the at least one second access object in response to triggering by a WUS; and
in the case that one or more of the at least one second access object are suitable cells, selecting, according to the first rule, a suitable cell from the at least one second access object as the target access object to perform the first operation.

The second step includes:
determining whether the at least one second access object is a suitable cell, based on a reference signal measurement result corresponding to the at least one second access object in the second access object group and a partial SIB of the at least one second access object included in the first information; and
in the case that one or more of the at least one second access object are suitable cells, selecting, according to the first rule, a suitable cell from the at least one second access object, and in the case that the terminal does not obtain an SIB of the suitable cell, transmitting, to the suitable cell, a WUS that triggers SIB transmission, and after receiving the SIB, using the suitable cell as the target access object to perform the first operation.

The third step includes:
ignoring the second access object and searching for another suitable cell as the target access object to perform the operation.

Further, searching for the another suitable cell as the target access object to perform the first operation may include:
searching one or more second access objects in the second access object group for a suitable cell as the target access object to perform the operation; and
searching one or more third access objects in a third access object group for a suitable cell as the target access object to perform the operation, where the third access object group includes an access object that satisfies a third condition,
where the third condition includes at least one of the following:
   using the first access object as a reference;
   being co-located with the first access object; and
   being contiguous access objects on the same frequency band as the first access object.

### Second example

Selecting the target access object to perform the first operation from the first access object and the second access object group based on the first information and the first rule may include: performing a fourth step or a fifth step.

The fourth step includes:
determining whether the first access object is a suitable cell, based on a reference signal measurement result of the first access object and a system information block SIB of the first access object;
determining whether the at least one second access object is a suitable cell, based on a reference signal measurement result of the at least one second access object in the second access object group and a partial SIB of the at least one second access object included in the first information;
in the case that the first access object is a suitable cell, and that one or more of the at least one second access object are suitable cells, selecting a suitable cell from the first access object and the at least one second access object according to the first rule; and
if the suitable cell is the first access object, using the suitable cell as the target access object to perform the first operation; or
if the suitable cell is the second access object, transmitting, to the suitable cell, a WUS that triggers SIB transmission, and after receiving the SIB, using the suitable cell as the target access object to perform the first operation.

The fifth step includes:
determining whether the first access object is a suitable cell, based on a reference signal measurement result of the first access object and an SIB of the first access object;
determining whether the at least one second access object is a suitable cell, based on a reference signal measurement result of the at least one second access object in the second access object group and an SIB transmitted on the at least one second access object in response to triggering by a WUS; and
in the case that the first access object is a suitable cell, and that one or more of the at least one second access object are suitable cells, selecting, according to the first rule, a suitable cell from the first access object and the at least one second access object as the target access object to perform the first operation.

In this embodiment of this application, a reference signal corresponding to a second access object may include at least one of an SSB, a CSI-RS, a DRS, a TRS, or another reference signal. Moreover, in the case that the reference signal is an SSB, for a second access object, if there is SSB transmission on the second access object, SSB measurement is directly performed on the second access object to obtain an SSB measurement result. If there is no SSB transmission on the second access object, an SSB measurement result transmitted on a fourth access object is used as an SSB measurement result of the second access object, where the fourth access object may include one of a reference access object configured for the second access object, an access object co-located with the second access object, or an access object that is in the same frequency band as and contiguous with the second access object. Alternatively, if there is no SSB transmission on the second access object, an SSB measurement result transmitted on the second access object after successful triggering by a WUS is used as an SSB measurement result of the second access object.

According to the random access method provided in the embodiment shown in FIG. 2, the network-side device may provide the first information about the second access object group to the terminal via the first access object, so that the terminal can select a target access object to perform camping or random access from the first access object and the second access object group based on the first information and the first rule, eliminating the need for continuous transmission of information such as an SSB and SIB on the second access object. Instead, on-demand SSB/SIB transmission or on-demand RACH monitoring is performed. Therefore, the network-side capacity can be maximized as much as possible while saving energy on the network side.

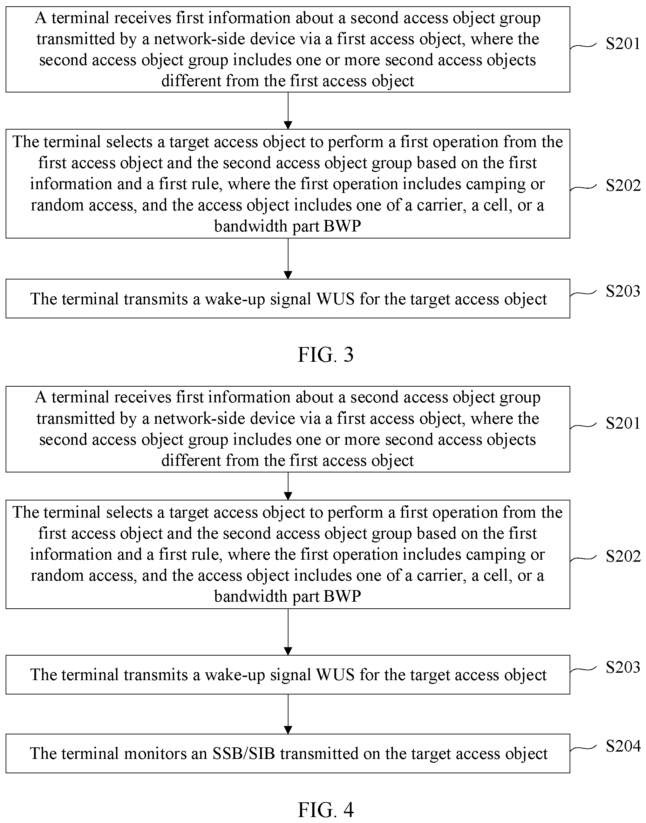

Optionally, the target access object belongs to the second access object group, the first information includes the WUS configuration information that triggers the SSB/SIB transmission on the at least one second access object, or the WUS configuration information that triggers the SSB/SIB adaptation for the at least one second access object, and the first information includes the WUS configuration information that triggers the random access channel RACH monitoring for the at least one second access object, or the WUS configuration information that triggers the RACH monitoring adaptation for the at least one second access object. In this case, after step 202 and before the first operation is performed on the target access object, as shown in FIG. 3, the random access method provided in this embodiment of this application may further include the following step:

Step 203: The terminal transmits a wake-up signal WUS for the target access object, where the WUS is used to trigger at least one of SSB transmission, SIB transmission, or RACH monitoring on the target access object.

In an example, transmitting, by the terminal, the WUS for the target access object includes: transmitting, by the terminal, the WUS for the target access object in the case that a first condition is satisfied.

The first condition may include at least one of the following:
1) the first access object being not a suitable cell;
2) the target access object being a suitable cell;
3) intra-frequency (intra-frequency) or inter-frequency (inter-frequency) measurement being performed on the target access object;
4) the target access object being in a first energy-saving state, where the first energy-saving state includes at least one of no SSB transmission, no SIB transmission, no RACH monitoring, transmitting an energy-saving SSB (such as a sparse SSB), transmitting an energy-saving SIB (such as a sparse SIB), or energy-saving RACH monitoring (such as sparse RACH monitoring), and the energy-saving SSB includes one of a light SSB, a reduced SSB, a sparse SSB, or a long-periodicity SSB;
5) the terminal being sensitive to an access delay; and
6) the terminal being in a process of link failure recovery.

In another example, before transmitting the WUS for the target access object, the method may further include: assuming, by the terminal, that the target access object is in a second energy-saving state.

The second energy-saving state may include at least one of the following:
no SIB transmission, normal SSB transmission, and normal RACH monitoring;
no SIB transmission, no SSB transmission or transmitting an energy-saving SSB (for example, a reduced SSB or a sparse SSB), using the first access object as a reference, and normal RACH monitoring;
no SIB transmission, normal SSB transmission, and not performing normal RACH monitoring;
no SIB transmission, no SSB transmission or transmitting an energy-saving SSB (for example, a reduced SSB or a sparse SSB), and not performing normal RACH monitoring;
transmitting an SIB, normal SSB transmission, and not performing normal RACH monitoring;
transmitting an SIB, no SSB transmission or transmitting an energy-saving SSB, and not performing normal RACH monitoring;
transmitting an SIB, normal SSB transmission, and normal RACH monitoring; and
transmitting an SIB, no SSB transmission or transmitting an energy-saving SSB, and normal RACH monitoring.

The energy-saving SSB includes one of a light SSB, a reduced SSB, a sparse SSB, or a long-periodicity SSB.

In a first example, transmitting, by the terminal, the WUS for the target access object may include: transmitting, by the terminal, one WUS for the target access object, where the WUS may be used for two purposes: triggering SSB transmission and/or SIB transmission on the target access object, and triggering RACH monitoring on the target access object.

In a second example, transmitting, by the terminal, the WUS for the target access object may include: transmitting, by the terminal, a first WUS for the target access object, where the first WUS is used to trigger SSB transmission and/or SIB transmission on the target access object; and transmitting, by the terminal, a second WUS for the target access object, where the second WUS is used to trigger RACH monitoring on the target access object.

For example, transmitting, by the terminal, the second WUS for the target access object (a time point for transmitting the second WUS) includes one of the following:
starting, by the terminal after Z slots/symbols/milliseconds from the transmission of the first WUS, transmission of the second WUS for the target access object;
starting, by the terminal after X slots/symbols/milliseconds from the reception of feedback for the first WUS, transmission of the second WUS for the target access object;
starting, by the terminal after Y slots/symbols/milliseconds from the reception of a first SSB or a first SIB transmitted on the target access object in response to successful triggering, transmission of the second WUS for the target access object;
transmitting, by the terminal when the number of transmissions of the first WUS reaches a maximum value, the second WUS for the target access object; and
starting a first timer upon the transmission of the first WUS, and transmitting, by the terminal upon the expiry of the first timer, the second WUS for the target access object.

According to the random access method provided in the embodiment shown in FIG. 3, the SSB/SIB transmission or the RACH monitoring on the second access object can be triggered on-demand (on-demand), instead of continuous SSB/SIB transmission or continuous RACH monitoring, or instead of no SSB/SIB transmission or no RACH monitoring. Therefore, the network-side capacity can be maximized as much as possible while saving energy for the network-side device.

Optionally, in the case that the WUS is used to trigger SSB/SIB transmission, as shown in FIG. 4, the random access method provided in this embodiment of this application may further include:
monitoring, by the terminal, an SSB/SIB transmitted on the target access object.

It should be noted that, regardless of whether the UE transmits one WUS or two WUSs (the first WUS and the second WUS) for the target access object, the UE may monitor a position of the SSB/SIB. In an example embodiment, in the case that the UE transmits one WUS for the target access object, the UE monitors the position of the SSB/SIB after the transmission of the one WUS; and in the case that the UE transmits two WUSs (the first WUS and the second WUS) for the target access object, the UE may monitor the position of the SSB/SIB after the transmission of the first WUS.

In an example embodiment, monitoring, by the terminal, the SSB/SIB transmitted on the target access object (a time point for monitoring the SSB/SIB transmitted on the target access object) may include one of the following:
starting a third timer upon completion of the WUS transmission, and starting, by the terminal upon the expiry of the third timer, the monitoring of the SSB/SIB transmitted on the target access object;
starting, by the terminal after C slots/symbols/milliseconds from the completion of the WUS transmission, the monitoring of the SSB/SIB transmitted on the target access object;
starting, by the terminal in a next slot after the WUS transmission, the monitoring of the SSB/SIB transmitted on the target access object; and
monitoring, by the terminal within an SSB/SIB monitoring window configured in the first information, the SSB/SIB transmitted on the target access object.

According to the random access method provided in the embodiment shown in FIG. 4, the SSB transmission on the target access object (one second access object) can be triggered on-demand (on-demand). This enables preparation for performing RACH on the target access object, increasing the network-side capacity.

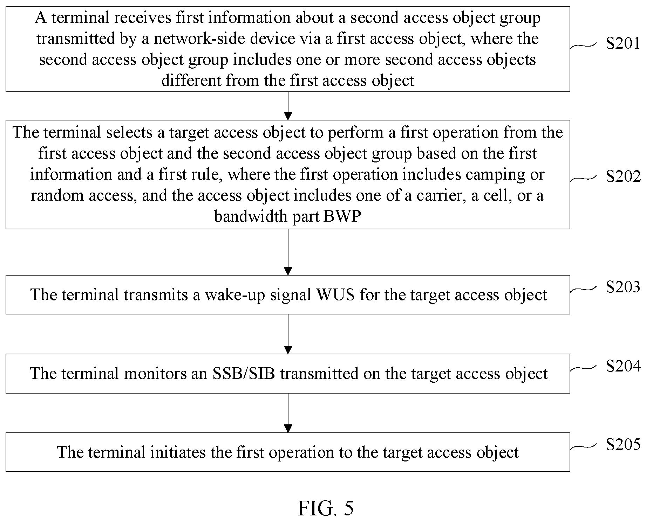

Optionally, as shown in FIG. 5, the random access method provided in this embodiment of this application may further include the following step:

Step 205: The terminal initiates the first operation to the target access object.

In the case that the UE transmits one WUS for the target access object, the UE initiates the first operation to the target access object after the transmission of the one WUS; and in the case that the UE transmits two WUSs (the first WUS and the second WUS) for the target access object, the UE may initiate the first operation to the target access object after the transmission of the second WUS. In an example embodiment, the target access object is one second access object, and step 205 (a time point for initiating the first operation to the target access object) may include one of the following:
starting a second timer upon the WUS transmission to the target access object, and initiating, by the terminal upon the expiry of the second timer, the first operation to the target access object (for example, initiating RACH, and accordingly, the WUS may be a same WUS used to trigger SSB transmission and RACH monitoring, or may be the second WUS);
initiating, by the terminal after A slots/symbols/milliseconds from the WUS transmission to the target access object, the first operation to the target access object (for example, initiating RACH, and accordingly, the WUS may be a same WUS used to trigger SSB transmission and RACH monitoring, or may be the second WUS); and
initiating, by the terminal after B slots/symbols/milliseconds from the reception of feedback for the WUS for the target access object, the first operation to the target access object (for example, initiating RACH, and accordingly, the WUS may be a same WUS used to trigger SSB transmission and RACH monitoring, or may be the second WUS).

Optionally, the random access method provided in this embodiment of this application may further include:
in the case that a second condition is satisfied, re-transmitting, by the terminal, the WUS for the target access object.

The second condition may include, but is not limited to, at least one of the following:
1) SSB detection fails;
2) the maximum count for random access is reached, where
   the number of transmissions of the WUS is less than or equal to a preset maximum number of transmissions;
3) No feedback for the previous WUS is received;
4) The previous WUS is used to trigger SSB/SIB transmission, and after the reception of the feedback for the previous WUS signal, the WUS used to trigger RACH monitoring is re-transmitted (that is, the WUS is re-transmitted to trigger RACH monitoring); and
5) No feedback for the previous WUS is received before the timer expires.

Optionally, the WUS signal re-transmitted has at least one of the following characteristics:
1) increased signal power;
2) a transmission time interval with the previous WUS being greater than a preset time interval; and
3) the frequency domain resource and sequence resource being the same as those for the previous WUS.

It should be noted that, in embodiments of this application, triggering SSB (trigger SSB) transmission, triggering SSB adaptation (trigger SSB adaptation), triggering normal SSB (trigger normal SSB) transmission, triggering SSB to return to a normal transmission mode, and the like have the same meaning, indicating triggering the second access object to change from a non-normal SSB transmission mode (a long-periodicity SSB transmission mode, a reduced SSB transmission mode, or an on-demand SSB transmission mode) to the normal SSB transmission mode.

It should be further noted that both the SIB1 and the SIB in embodiments of this application refer to a system information block, and the SIB1 is an example of the SIB.

With reference to an example embodiment, the application of the random access method provided in embodiments of this application is described below.

### Embodiment 1

It is assumed that the terminal obtains, on the operating first carrier Cell 0, first information about second carriers Cell1, Cell2, and Cell3.

In the aforementioned scenario 1 (on the second carriers, normal SSB transmission and normal RACH monitoring are performed, but normal SIB1 transmission is not performed), WUS configuration information that triggers SIB transmission on each second carrier in a second carrier group is configured on the first carrier, and on all the second carriers in the second carrier group, normal SSB transmission and normal RACH monitoring (monitoring) are performed, but normal SIB1 transmission is not performed. In an example embodiment:
Cell 0: belongs to band0, on which normal SSB and SIB1 transmissions are performed, and WUS configuration information that triggers SIB1 transmission on Cell1, Cell2, and Cell3 is configured;
Cell 1: belongs to Band 1, on which normal SSB transmission and normal RACH monitoring are performed, but no SIB1 transmission is performed;
Cell 2: belongs to Band 2, on which normal SSB transmission and normal RACH monitoring are performed, but no SIB1 transmission is performed; and
Cell 3: belongs to Band 3, on which normal SSB transmission and normal RACH monitoring are performed, but no SIB1 transmission is performed.

In some embodiments, the first information about the second carrier group transmitted by the network-side device via the first carrier may include at least one of the following:
1) WUS configuration information that triggers SIB transmission or SIB adaptation on at least one second carrier;
2) relevant configuration information of an SSB currently transmitted on the at least one second carrier, which may include at least one of the following:
   whether an SSB is currently transmitted on the at least one second carrier;
   at least one of a frequency of an SSB that is being transmitted on the at least one second carrier, an SSB transmission periodicity, or the number of SSBs within one transmission periodicity; and
   a transmission mode of an SSB that is being transmitted on the at least one second carrier, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
3) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
4) characteristic information of the at least one second carrier, which may include at least one of the following:
   whether the at least one second carrier is in a barring (Bar) status;
   a priority of the at least one second carrier when the UE performs random access channel selection;
   whether the at least one second carrier is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second carrier; for example, a UE for which (UE ID mod carrier number) = N can perform random access on the carrier;
   whether the at least one second carrier supports UE camping;
   whether the at least one second carrier is a suitable cell (suitable Cell);
   whether the at least one second carrier supports cell selection and cell reselection; and
   partial system information of the at least one second carrier, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

In some embodiments, during selection of a cell to perform a first operation, even if there is a special carrier (a second carrier that has obtained information from the first carrier), the first carrier is still given priority.

In some embodiments, after the UE detects the first carrier and obtains the first information, if the first carrier is determined as a suitable cell, the UE does not transmit a WUS, and selects the first carrier for camping (monitor paging).

If the first carrier is not determined as a suitable cell (suitable cell), at least one of the following is performed:
Transmitting a WUS first, and determining based on a triggered SIB1 and an SSB measurement result: The UE selects one or more carriers in the second carrier group according to a first rule, transmits a corresponding WUS and receives an SIB1, and determines whether the one or more carriers are suitable cells, based on the SSB measurement result and SIB1 information.

If at least one carrier is a suitable cell, the UE selects one carrier for camping (monitor paging) according to the first rule.

Determining based on partial SIB1 information and an SSB measurement result, and transmitting a WUS after the determining: The UE selects one or more carriers in the second carrier group as a target cell according to the first rule, and determines whether the one or more carriers are suitable cells, based on information corresponding to the carrier (for example, the configuration information related to cell selection or cell reselection) and the SSB measurement result.

If at least one carrier is a suitable cell, the UE selects one carrier according to the first rule, and transmits a WUS to the one carrier. After obtaining the SIB1, the UE is camped (monitor paging) on the carrier.

The UE ignores the second carrier group and seeks other suitable cells.

It should be noted that, a reference signal corresponding to a second carrier may include at least one of an SSB, a CSI-RS, a DRS, a TRS, or another reference signal. Moreover, in the case that the reference signal is an SSB, for a second carrier, if there is SSB transmission on the second carrier, SSB measurement is directly performed on the second carrier to obtain an SSB measurement result. If there is no SSB transmission on the second carrier, an SSB measurement result transmitted on a fourth carrier is used as an SSB measurement result of the second carrier, where the fourth carrier may include one of a reference carrier configured for the second carrier, a carrier co-located with the second carrier, or a carrier that is in the same frequency band as and contiguous with the second carrier. Alternatively, if there is no SSB transmission on the second carrier, an SSB measurement result transmitted on the second carrier after successful triggering by a WUS is used as an SSB measurement result of the second carrier. (The same applies below and will not be repeated.)

Optionally, in some embodiments, the UE performs at least one of the following to determine a target carrier to perform the first operation:
The UE selects the first carrier and one or more carriers in the second carrier group according to the first rule: For the first carrier, determining whether the first carrier is a suitable cell, based on an SSB measurement result and an SIB1 configuration; and for the carrier in the second carrier group, transmitting a corresponding WUS and receiving an SIB1, and determining whether the one or more second carriers are suitable cells, based on an SSB measurement result and the SIB1.

If at least one carrier is a suitable cell, the UE selects one carrier for camping (monitor paging) according to the first rule.

The UE selects the first carrier and one or more carriers in the second carrier group as a target cell according to the first rule: For the first carrier, determining whether the first carrier is a suitable cell, based on an SSB measurement result and an SIB1 configuration; and for the carrier in the second carrier group, determining whether the one or more second carriers are suitable cells, based on information corresponding to the carrier (for example, the configuration information related to cell selection or cell reselection) and the SSB measurement result.

If at least one carrier is a suitable cell, the UE selects one carrier according to the first rule: If the carrier is the first carrier, the UE is camped directly on the first carrier. If the carrier is the carrier of the second carrier group, the UE transmits a WUS to the carrier, and is camped (monitor paging) on the carrier after obtaining an SIB1.

In some embodiments, for a UE camped on the first carrier, intra-frequency and inter-frequency measurement is performed according to configuration information of the first carrier. If a second carrier in the second carrier group is determined as a highest ranked cell (highest ranked Cell) or a target cell for cell reselection, the UE performs at least one of the following to determine the target carrier to perform the first operation:

Transmitting a WUS to the second carrier to trigger SIB1 transmission on the second carrier, and after obtaining an SIB1, determining, by the UE, whether the cell is a suitable cell.

If the cell is a suitable cell, the UE performs cell reselection and is camped on the cell.

Determining whether the cell is a suitable cell, and if the cell is a suitable cell, transmitting a WUS to obtain an SIB1, and then performing cell reselection for camping on the cell.

In some embodiments, for a UE camped on the first carrier, if it needs to perform random access, the UE by default initiates RACH directly on the first carrier for random access.

In some embodiments, for a UE camped on the first carrier, if it needs to perform random access, the UE selects a target carrier for random access from the first carrier and the second carrier group according to the first rule:
1) if the selected target carrier is the first carrier, directly initiating RACH for random access; and
2) if the selected target carrier is the carrier of the second carrier group, first transmitting a WUS to the carrier to obtain an SIB 1, and then initiating RACH for random access on the carrier based on configuration information of the SIB1.

In some embodiments, the first rule includes: filtering, by the UE, a target carrier that satisfies a condition, where the condition includes at least one of the following:
the target carrier is not in a barring status for the UE;
RSRP/RSRQ measured on the target carrier satisfies a specific condition, for example, being greater than or equal to a threshold (threshold); and
the target carrier is a suitable cell for the UE.

In some embodiments, the UE selects one target carrier from all carriers (the first carrier and/or the second carrier group) or all selected carriers, which includes at least one of the following:
randomly selecting the target carrier;
randomly generating a weight value p, where for each carrier, a corresponding weight value p (1), p (2), ... is configured, and when p is between p(0) +p(1) + ... +p(i-1) and p(0) +p(1) + ... +p(i), the carrier i is selected as the target carrier;
indicating/configuring, by the network side, the target carrier on which the UE is to perform random access;
selecting a carrier with a largest or smallest carrier index as the target carrier;
selecting a carrier of which a carrier center frequency is the largest or smallest or in the middle as the target carrier;
selecting a carrier with a largest or smallest SCS as the target carrier;
selecting a second carrier with a minimum frequency interval from the first carrier as the target carrier;
selecting a carrier requiring a minimum number of WUS transmissions as the target carrier;
selecting a carrier with a highest priority as the target carrier; and
selecting a carrier with a largest reference signal RSRP/SINR measurement value as the target carrier.

In the aforementioned scenario 2 (on the second carriers, no SSB transmission is performed (there is a reference carrier), normal RACH monitoring is performed, and normal SIB1 transmission is not performed), WUS configuration information that triggers SIB transmission on each second carrier in a second carrier group is configured on the first carrier, and on at least one second carrier in the second carrier group, no SSB transmission is performed, normal RACH monitoring (monitoring) is performed, and normal SIB1 transmission is not performed. In an example embodiment:
Cell 0: belongs to band0, on which normal SSB transmission is performed, and WUS configuration information that triggers SIB transmission on Cell1, Cell2, and Cell3 is configured;
Cell 1: belongs to Band 1, on which no SSB transmission is performed (using the first carrier as a reference), normal RACH monitoring is performed, and no SIB1 transmission is performed;
Cell 2: belongs to Band 2, on which normal SSB transmission and normal RACH monitoring are performed, but no SIB1 transmission is performed; and
Cell 3: belongs to Band3, on which no SSB transmission is performed (using Cell2 as a reference), normal RACH monitoring is performed, and no SIB1 transmission is performed.

In some embodiments, the first information about the second carrier group transmitted by the network-side device via the first carrier may include at least one of the following:
1) WUS configuration information that triggers SIB transmission or SIB adaptation on at least one second carrier;
2) relevant configuration information of an SSB currently transmitted on the at least one second carrier, which may include at least one of the following:
   whether an SSB is currently transmitted on the at least one second carrier;
   at least one of a frequency of an SSB that is being transmitted on the at least one second carrier, an SSB transmission periodicity, or the number of SSBs within one transmission periodicity; and
   a transmission mode of an SSB that is being transmitted on the at least one second carrier, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
3) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
4) characteristic information of the at least one second carrier, which may include at least one of the following:
   whether the at least one second carrier is in a barring (Bar) status;
   a priority of the at least one second carrier when the UE performs random access channel selection;
   whether the at least one second carrier is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second carrier; for example, a UE for which (UE ID mod carrier number) = N can perform random access on the carrier;
   whether the at least one second carrier supports UE camping;
   whether the at least one second carrier is a suitable cell (suitable Cell);
   whether the at least one second carrier supports cell selection and cell reselection;
   partial system information of the at least one second carrier, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information;
   whether the at least one second carrier can use the first carrier as a reference carrier;
   whether the at least one second carrier is co-located (co-located) with the first carrier;
   whether the at least one second carrier is located in the same timing advance group (Timing Advance Group, TAG) as the first carrier;
   whether the at least one second carrier has a quasi co-location (Quasi Co-Location, QCL) relationship with the first carrier;
   a reference carrier for the at least one second carrier;
   a carrier co-located with the at least one second carrier;
   a carrier located in the same TAG as the at least one second carrier; and
   a carrier having a QCL relationship with the at least one second carrier.

In some embodiments, the first information may be transmitted by the first carrier via a broadcast message. Alternatively, the first information is by default the same as information corresponding to the first carrier. Alternatively, when the first information is not configured, it is by default the same as the information corresponding to the first carrier. For example, at least one of PLMN information, configuration information related to cell selection (Cell selection) criteria, configuration information related to cell reselection (Cell reselection) criteria, or cell barring (Cell Bar) information corresponding to the second carrier is the same as that corresponding to the first carrier.

In some embodiments, after the UE detects the first carrier and obtains the first information, if the first carrier is determined as a suitable cell, the UE selects the first carrier for camping (monitor paging), or selects one carrier for camping (monitor paging) from the first carrier and/or the second carrier group according to a first rule, where
the second carrier group includes at least one of a carrier that uses the first carrier as a reference cell, a carrier co-located with the first carrier, or a carrier that is in the same frequency band as and contiguous with the first carrier.

If the first carrier is not determined as a suitable cell, at least one of the following is performed:
The UE selects one or more carriers in the second carrier group according to the first rule, transmits a corresponding WUS and receives an SIB1, and determines whether the one or more carriers are suitable cells, based on the SSB measurement result and SIB1 information.

If at least one second carrier is a suitable cell, the UE selects one second carrier according to the first rule, for camping (monitor paging).

The UE selects one or more carriers in the second carrier group as a target cell according to the first rule, and determines whether the one or more carriers are suitable cells, based on information corresponding to the carrier (for example, the configuration information related to cell selection or cell reselection) and the SSB measurement result.

If at least one second carrier is a suitable cell, the UE selects one second carrier according to the first rule, and transmits a WUS to the second carrier. After obtaining the SIB1, the UE is camped (monitor paging) on the carrier.

The UE ignores the second carrier group and seeks other suitable cells.

Optionally, in some embodiments, the UE performs one of the following to determine a target carrier to perform the first operation:
The UE selects the first carrier and one or more carriers in the second carrier group according to the first rule: For the first carrier, determining whether the first carrier is a suitable cell, based on an SSB measurement result and an SIB1 configuration; and for the carrier in the second carrier group, transmitting a corresponding WUS and receiving an SIB1, and determining whether the one or more carriers are suitable cells, based on an SSB measurement result and the SIB1.

If at least one carrier is a suitable cell, the UE selects one carrier for camping (monitor paging) according to the first rule.

The UE selects the first carrier and one or more carriers in the second carrier group as a target cell according to the first rule: For the first carrier, determining whether the first carrier is a suitable cell, based on an SSB measurement result and an SIB1 configuration; and for the carrier in the second carrier group, determining whether the one or more carriers are suitable cells, based on information corresponding to the carrier (for example, the configuration information related to cell selection or cell reselection) and the SSB measurement result.

If at least one carrier is a suitable cell, the UE selects one carrier according to the first rule: If the carrier is the first carrier, the UE is camped directly on the first carrier. If the carrier is the carrier of the second carrier group, the UE first transmits a WUS to the carrier, and is then camped (monitor paging) on the carrier after obtaining an SIB1.

It should be noted that, a reference signal corresponding to a second carrier may include at least one of an SSB, a CSI-RS, a DRS, a TRS, or another reference signal. Moreover, in the case that the reference signal is an SSB, for a second carrier, if there is SSB transmission on the second carrier, SSB measurement is directly performed on the second carrier to obtain an SSB measurement result. If there is no SSB transmission on the second carrier, an SSB measurement result transmitted on a fourth carrier is used as an SSB measurement result of the second carrier, where the fourth carrier may include one of a reference carrier configured for the second carrier, a carrier co-located with the second carrier, or a carrier that is in the same frequency band as and contiguous with the second carrier. Alternatively, if there is no SSB transmission on the second carrier, an SSB measurement result transmitted on the second carrier after successful triggering by a WUS is used as an SSB measurement result of the second carrier. (The same applies below and will not be repeated.)
In some embodiments, for a UE camped on the first carrier, if it needs to perform random access, the UE by default initiates RACH directly on the first carrier for random access.

In some embodiments, for a UE camped on the first carrier, if it needs to perform random access, the UE selects a target carrier for random access from the first carrier and the second carrier group according to the first rule:
1) if the selected target carrier is the first carrier, directly initiating RACH for random access; and
2) if the selected target carrier is the carrier of the second carrier group, first transmitting a WUS to the carrier to obtain an SIB 1, and then initiating RACH for random access on the carrier based on configuration information of the SIB1.

In some embodiments, the first rule includes: filtering, by the UE, a target carrier that satisfies a condition, where the condition includes at least one of the following:
the target carrier is not in a barring status for the UE;
RSRP/RSRQ measured on the target carrier satisfies a specific condition, for example, being greater than or equal to a threshold (threshold); and
the target carrier is a suitable cell for the UE.

In some embodiments, the UE selects one target carrier from all carriers (the first carrier and/or the second carrier group) or all selected carriers, which includes at least one of the following:
randomly selecting the target carrier;
randomly generating a weight value p, where for each carrier, a corresponding weight value p (1), p (2), ... is configured, and when p is between p(0) +p(1) + ... +p(i-1) and p(0) +p(1) + ... +p(i), the carrier i is selected as the target carrier;
indicating/configuring, by the network side, the target carrier on which the UE is to perform random access;
selecting a carrier with a largest or smallest carrier index as the target carrier;
selecting a carrier of which a carrier center frequency is the largest or smallest or in the middle as the target carrier;
selecting a carrier with a largest or smallest SCS as the target carrier;
selecting a second carrier with a minimum frequency interval from the first carrier as the target carrier;
selecting a carrier requiring a minimum number of WUS transmissions as the target carrier;
selecting a carrier with a highest priority as the target carrier; and
selecting a carrier with a largest reference signal RSRP/SINR measurement value as the target carrier.

In the aforementioned scenario 3 (on the second carriers, no SSB and SIB1 transmissions are performed, and normal RACH monitoring is performed), WUS configuration information that triggers SSB and SIB transmissions on each second carrier in a second carrier group is configured on the first carrier, and on at least one second carrier in the second carrier group, no SSB transmission is performed or sparse (sparse) SSB transmission is performed, SSB transmission needs to be triggered by a WUS, and normal RACH monitoring (monitoring) is performed. In an example embodiment:
Cell 0: belongs to band0, on which normal SSB transmission is performed, and WUS configuration information that triggers SIB1 and SSB transmissions on Cell1, Cell2, and Cell3 is configured;
Cell 1: belongs to Band 1, on which no SSB transmission is performed, normal RACH monitoring is performed, and no SIB1 transmission is performed;
Cell 2: belongs to Band 2, on which normal SSB transmission and normal RACH monitoring are performed, but no SIB1 transmission is performed; and
Cell 3: belongs to Band3, on which sparse SSB transmission is performed, normal RACH monitoring is performed, and no SIB1 transmission is performed.

In some embodiments, the first information about the second carrier group (for example, Cell1, Cell2, and Cell3) transmitted by the network-side device via the first carrier may include at least one of the following:
1) WUS configuration information that triggers SIB transmission or SIB adaptation on at least one second carrier;
2) WUS configuration information that triggers SSB transmission or SSB adaptation on at least one second carrier;
3) relevant configuration information of an SSB currently transmitted on the at least one second carrier, which may include at least one of the following:
   whether an SSB is currently transmitted on the at least one second carrier;
   at least one of a frequency of an SSB that is being transmitted on the at least one second carrier, an SSB transmission periodicity, or the number of SSBs within one transmission periodicity; and
   a transmission mode of an SSB that is being transmitted on the at least one second carrier, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
4) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
5) relevant configuration information of an SSB transmitted after successful triggering by a WUS, which may include at least one of the following:
   at least one of a frequency of an SSB transmitted on the at least one second access object after successful triggering by a WUS, an SSB transmission periodicity, or the number of SSBs within one transmission periodicity;
   a monitoring window for an SSB transmitted on the at least one second access object after successful triggering by a WUS, that is, the UE monitors an SSB within the monitoring window;
   at least one time domain resource index or at least one time domain resource position of an SSB actually transmitted on the at least one second access object after successful triggering by a WUS;
   at least one of a transmission duration of an SSB transmitted on the at least one second access object after successful triggering by a WUS, the number of SSB transmissions, or the number of SSB transmission periods;
   a relative relationship between an SSB transmitted on the at least one second access object after successful triggering by a WUS and an SSB transmitted on the first access object in at least one of a time domain, a frequency domain, or a space domain;
   a time domain resource position of a first SSB or a first SIB transmitted on the at least one second access object after successful triggering by a WUS, for example, transmission is performed in the nearest SSB periodicity after X slots/symbols from the transmission time of the WUS; and
   a transmission mode of SSB transmission on the at least one second access object after successful triggering by a WUS, where the transmission mode includes one of a normal transmission mode, an energy-saving transmission mode (for example, transmitting only a PSS and an SSS), a consolidated transmission mode (for example, no time-domain interval exists between a plurality of SSBs), a long-periodicity transmission mode (with a relatively long SSB periodicity), or an on-demand (on-demand) transmission mode;
6) characteristic information of the at least one second carrier, which may include at least one of the following:
   whether the at least one second carrier is in a barring (Bar) status;
   a priority of the at least one second carrier when the UE performs random access channel selection;
   whether the at least one second carrier is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second carrier; for example, a UE for which (UE ID mod carrier number) = N can perform random access on the carrier;
   whether the at least one second carrier supports UE camping;
   whether the at least one second carrier is a suitable cell (suitable Cell);
   whether the at least one second carrier supports cell selection and cell reselection; and
   partial system information of the at least one second carrier, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

In some embodiments, the first information may be transmitted by the first carrier via a broadcast message. Alternatively, the first information is by default the same as information corresponding to the first carrier. Alternatively, when the first information is not configured, it is by default the same as the information corresponding to the first carrier. For example, at least one of PLMN information, configuration information related to cell selection (Cell selection) criteria, configuration information related to cell reselection (Cell reselection) criteria, or cell barring (Cell Bar) information corresponding to the second carrier is the same as that corresponding to the first carrier.

In some embodiments, after the UE detects the first carrier and obtains the first information, if the first carrier is determined as a suitable cell, the UE selects the first carrier for camping (monitor paging). If the first carrier is not determined as a suitable cell, at least one of the following is performed:
The UE selects one or more carriers in the second carrier group according to the first rule, transmits a corresponding WUS and receives an SIB1 and/or SSB, and determines whether the one or more carriers are suitable cells, based on the SSB measurement result and SIB1 information.

If at least one carrier is a suitable cell, the UE selects one carrier for camping (monitor paging) according to the first rule.

The UE selects one or more carriers in the second carrier group as a target cell according to the first rule, and determines whether the one or more carriers are suitable cells, based on information corresponding to the carrier (for example, the configuration information related to cell selection or cell reselection) and the SSB measurement result. For a carrier with no SSB transmission in the second carrier group, an SSB measurement result is detected after SSB transmission is successfully triggered by a WUS.

If at least one carrier is a suitable cell, the UE selects one carrier according to the first rule, and transmits a WUS to the one carrier. After obtaining the SIB1, the UE is camped (monitor paging) on the carrier.

The UE ignores the second carrier group and seeks other suitable cells.

Optionally, in some embodiments, the UE performs one of the following to determine a target carrier to perform the first operation:
The UE selects the first carrier and one or more carriers in the second carrier group according to the first rule: For the first carrier, determining whether the first carrier is a suitable cell, based on an SSB measurement result and an SIB1 configuration; and for the carrier in the second carrier group, transmitting a corresponding WUS and receiving an SIB1 and/or SSB, and determining whether the one or more carriers are suitable cells, based on an SSB measurement result and the SIB1.

If at least one carrier is a suitable cell, the UE selects one carrier for camping (monitor paging) according to the first rule.

The UE selects the first carrier and one or more carriers in the second carrier group as a target cell according to the first rule: For the first carrier, determining whether the first carrier is a suitable cell, based on an SSB measurement result and an SIB1 configuration; for a carrier with SSB transmission in the second carrier group, determining whether the one or more carriers are suitable cells, based on information corresponding to the carrier (for example, the configuration information related to cell selection or cell reselection) and the SSB measurement result; and for a carrier with no SSB transmission in the second carrier group, transmitting a corresponding WUS and receiving an SIB1 and SSB, and determining whether the one or more carriers are suitable cells, based on the SSB measurement result and the SIB1.

If at least one carrier is a suitable cell, the UE selects one carrier according to the first rule: If the carrier is the first carrier, the UE is camped directly on the first carrier. If the carrier is the carrier of the second carrier group, the UE transmits a WUS to the carrier, and is camped (monitor paging) on the carrier after obtaining an SIB1.

In some embodiments, for a UE camped on the first carrier, intra-frequency and inter-frequency measurement is performed according to configuration information of the first carrier. If a second carrier in the second carrier group is determined as a highest ranked cell (highest ranked Cell) or a target cell for cell reselection, the UE performs at least one of the following:
Transmitting a WUS to the carrier, and after obtaining an SIB1 and/or SSB, determining whether the cell is a suitable cell.

If the cell is a suitable cell, the UE performs cell reselection and is camped on the cell.

Determining whether the cell is a suitable cell, and if the cell is a suitable cell, transmitting a WUS to obtain an SIB1, and performing cell reselection for camping on the cell.

Transmitting a WUS to the carrier to trigger SSB transmission, and after obtaining an SSB measurement result, determining, by the UE, whether the cell is a suitable cell; and if the cell is a suitable cell, transmitting a WUS to obtain an SIB1, and performing cell reselection for camping on the cell.

In some embodiments, for a UE camped on the first carrier, if it needs to perform random access, the UE by default initiates RACH directly on the first carrier for random access.

In some embodiments, for a UE camped on the first carrier, if it needs to perform random access, the UE selects a target carrier for random access from the first carrier and the second carrier group according to the first rule:
1) if the selected target carrier is the first carrier, directly initiating RACH for random access; and
2) if the selected target carrier is the carrier of the second carrier group, first transmitting a WUS to the carrier to obtain an SIB1 and/or SSB, and then initiating RACH for random access on the carrier based on configuration of the SIB1.

In some embodiments, the first rule includes: filtering, by the UE, a target carrier that satisfies a condition, where the condition includes at least one of the following:
the target carrier is not in a barring status for the UE;
RSRP/RSRQ measured on the target carrier satisfies a specific condition, for example, being greater than or equal to a threshold (threshold);
the target carrier is a suitable cell for the UE; and
normal SSB transmission is performed on the target carrier.

In some embodiments, the UE selects one target carrier from all carriers (the first carrier and/or the second carrier group) or all selected carriers, which includes at least one of the following:
randomly selecting the target carrier;
randomly generating a weight value p, where for each carrier, a corresponding weight value p (1), p (2), ... is configured, and when p is between p(0) +p(1) + ... +p(i-1) and p(0) +p(1) + ... +p(i), the carrier i is selected as the target carrier;
indicating/configuring, by the network side, the target carrier on which the UE is to perform random access;
selecting a carrier with a largest or smallest carrier index as the target carrier;
selecting a carrier of which a carrier center frequency is the largest or smallest or in the middle as the target carrier;
selecting a carrier with a largest or smallest SCS as the target carrier;
selecting a second carrier with a minimum frequency interval from the first carrier as the target carrier;
selecting a carrier requiring a minimum number of WUS transmissions as the target carrier;
selecting a carrier with a highest priority as the target carrier; and
selecting a carrier with a largest reference signal RSRP/SINR measurement value as the target carrier.

In the aforementioned scenario 4 (on the second carriers, no SSB transmission is performed (using the first carrier as a reference), no SIB1 transmission is performed, and normal RACH monitoring is not performed), WUS configuration information that triggers SIB1 transmission and RACH monitoring on each second carrier in a second carrier group is configured on the first carrier, and on all second carriers in the second carrier group, SSB transmission is performed or no SSB transmission is performed (using the first carrier as a reference), and normal RACH monitoring (monitoring) is not performed. In an example embodiment:
Cell 0: belongs to band0, on which normal SSB transmission is performed, and WUS configuration information that triggers SIB1 and SSB transmissions and/or RACH monitoring on Cell1, Cell2, and Cell3 is configured;
Cell 1: belongs to Band 1, on which no SSB transmission is performed (using the first carrier as a reference), normal RACH monitoring is not performed, and no SIB1 transmission is performed;
Cell 2: belongs to Band 2, on which normal SSB transmission is performed, normal RACH monitoring is not performed, and no SIB1 transmission is performed; and
Cell 3: belongs to Band3, on which no SSB transmission is performed (using the first carrier as a reference), normal RACH monitoring is not performed, and no SIB1 transmission is performed.

For scenario 4, regarding the first information about the second carrier group transmitted by the network-side device via the first carrier, as well as how the UE determines the target object to perform the first operation based on the first rule and the first information, refer to the foregoing description of scenario 2. Only the differences between the two are described here. In an example embodiment, the differences between the two are as follows:
For random access:
In some embodiments, when the selected random access carrier is a carrier of the second carrier group, the UE needs to transmit a WUS to trigger RACH monitoring on the target carrier, and then perform a RACH random access procedure.

For WUS:
In some embodiments, each WUS is for a single function. For example, a first WUS is used to trigger SIB1 transmission on the target carrier, and after detecting an SIB1, the UE then transmits a second WUS to trigger RACH monitoring on the target carrier. Resource configuration information of the two WUSs is configured by the network side via Cell0 (the first carrier), and time-frequency resources used by the two WUS transmissions may be fully overlapping or may be two independent sets of resources.

In some embodiments, both functions may also be accomplished by a single WUS: triggering SIB1 transmission on the target carrier, and triggering RACH monitoring on the target carrier.

In the aforementioned scenario 5 (on the second carriers, no SSB transmission is performed, no SIB1 transmission is performed, and normal RACH monitoring is not performed), WUS configuration information that triggers SSB and SIB1 transmissions and RACH monitoring on each second carrier in a second carrier group is configured on the first carrier, and on at least one second carrier in the second carrier group, no SSB transmission is performed, no SIB1 transmission is performed, and normal RACH monitoring (monitoring) is not performed. In an example embodiment:
Cell 0: belongs to band0, on which normal SSB transmission is performed, and WUS configuration information that triggers SIB1 and SSB transmissions and RACH monitoring on Cell1, Cell2, and Cell3 is configured;
Cell 1: belongs to Band 1, on which on-demand SSB transmission is performed, normal RACH monitoring is not performed, and no SIB1 transmission is performed;
Cell 2: belongs to Band 2, on which normal SSB transmission is performed, normal RACH monitoring is not performed, and no SIB1 transmission is performed; and
Cell 3: belongs to Band3, on which sparse SSB transmission is performed, normal RACH monitoring is not performed, and no SIB1 transmission is performed.

For scenario 5, regarding the first information about the second carrier group transmitted by the network-side device via the first carrier, as well as how the UE determines the target object to perform the first operation based on the first rule and the first information, refer to the foregoing description of scenario 3. Only the differences between the two are described here. In an example embodiment, the differences between the two are as follows:

For random access:
In some embodiments, when the selected random access carrier is a carrier of the second carrier group, the UE needs to transmit a WUS to trigger RACH monitoring on the target carrier, and then perform a RACH random access procedure.

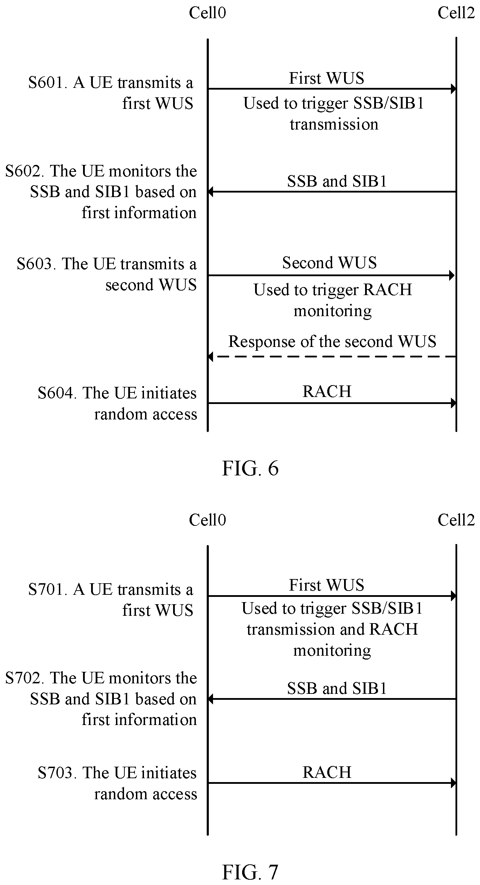

For WUS:
In some embodiments, a first WUS is used to trigger SIB1 transmission and SSB transmission on the target carrier, and after detecting an SIB1 and an SSB transmitted on the target carrier, the UE then transmits a second WUS to trigger RACH monitoring on the target carrier. Resource configuration of the two WUSs is configured by the network side via Cell0 (the first carrier), and time-frequency resources used by the two WUS transmissions may be fully overlapping or may be two independent sets of resources. For example, the target carrier is Cell2, and a procedure in which the UE transmits a WUS to initiate random access is shown in FIG. 6.

Referring to FIG. 6, it can be seen that the procedure may include the following steps:
Step 601: The UE transmits a first WUS to Cell2 via Cell0, to trigger SSB and SIB1 transmissions on Cell2.

Step 602: The UE monitors, based on first information, an SSB and SIB1 transmitted on Cell2.

Step 603: The UE transmits a second WUS to Cell2 via Cell0, to trigger RACH monitoring on Cell2.

Step 604: The UE initiates random access to Cell2 based on the monitored SSB and SIB1.

In some embodiments, three functions may also be accomplished by a single WUS: triggering SIB1 transmission and SSB transmission on the target carrier, and triggering RACH monitoring on the target carrier. For example, the target carrier is Cell2, and a procedure in which the UE transmits a WUS to initiate random access is shown in FIG. 7.

Referring to FIG. 7, it can be seen that the procedure may include the following steps:
Step 701: The UE transmits a first WUS to Cell2 via Cell0, to trigger SSB and SIB1 transmissions and RACH monitoring.

Step 702: The UE monitors, based on first information, an SSB and SIB1 transmitted on Cell2.

Step 703: The UE initiates random access to Cell2 based on the monitored SSB and SIB1.

Embodiment 2 (when there are a plurality of carriers, the UE selects a carrier with a highest priority to perform RACH)
The terminal obtains, on the operating first carrier Cell0, first information about the second carriers Cell1, Cell2, Cell3, Cell4, and Cell5. In an example embodiment:
Cell 0: belongs to band0, on which normal SSB transmission is performed, and WUS configuration information that triggers SSB and SIB1 transmissions and RACH monitoring on Cell1, Cell2, and Cell3 is configured;
Cell 1: belongs to Band 1, on which normal SSB transmission is not performed (using the first carrier as a reference), normal RACH monitoring is not performed, and normal SIB1 transmission is not performed (on-demand SIB1);
Cell 2: belongs to Band 2, on which on-demand SSB transmission is performed, normal RACH monitoring is not performed, and normal SIB1 transmission is performed;
Cell 3: belongs to Band 3, on which normal SSB transmission is not performed (using the first carrier as a reference), normal RACH monitoring is not performed, and normal SIB1 transmission is not performed (on-demand SIB1);
Cell 4: belongs to Band 4, on which normal SSB transmission is not performed (using the first carrier as a reference), normal RACH monitoring is performed, and normal SIB1 transmission is not performed (on-demand SIB1); and
Cell 5: belongs to Band 5, on which normal SSB transmission is not performed (using the first carrier as a reference), normal RACH monitoring is performed, and normal SIB1 transmission is performed.

In this embodiment, the UE selects a target carrier for random access according to a carrier priority.
carrier priority with normal SSB transmission > carrier priority with non-normal SSB transmission (using the first carrier as reference) > carrier priority with on-demand SSB transmission (on-demand SSB);
carrier priority with normal SIB transmission > carrier priority with on-demand SIB transmission (on-demand SIB); and
carrier priority with normal RACH monitoring > carrier priority with on-demand RACH monitoring.

It should be noted that, in embodiments of this application, on-demand SSB means that the carrier supports an on-demand SSB transmission mode, i.e., allowing the UE to use a WUS to trigger normal SSB transmission. The same applies to on-demand SIB1 and on-demand RACH monitoring.

Embodiment 3 (when there are a plurality of carriers, whether with different transmission modes or the same transmission mode, the UE selects a carrier requiring a minimum number of WUS transmissions to perform RACH)

The terminal obtains, on the operating first carrier Cell0, first information about the second carriers Cell1, Cell2, Cell3, Cell4, and Cell5. In an example embodiment:
Cell 0: belongs to band0, on which normal SSB transmission is performed, normal RACH monitoring is performed, and normal SIB1 transmission is performed;
Cell 1: belongs to Band 1, on which normal SSB transmission is not performed (using an SSB of the first carrier as a reference), normal RACH monitoring is performed, and normal SIB1 transmission is performed;
Cell 2: belongs to Band 2, on which on-demand SSB (on-demand SSB) transmission is performed, normal RACH monitoring is performed, and on-demand SIB1 (on-demand SIB1) transmission is performed;
Cell 3: belongs to Band 3, on which normal SSB transmission is performed, normal RACH monitoring is not performed, and on-demand SIB1 transmission is performed;
Cell 4: belongs to Band 4, on which normal SSB transmission is not performed (using an SSB of the first carrier as a reference), normal RACH monitoring is not performed, and normal SIB1 transmission is performed; and
Cell 5: belongs to Band 5, on which on-demand SSB transmission is performed, normal RACH monitoring is not performed, and on-demand SIB1 transmission is performed.

The UE selects a carrier in the second carrier group for random access based on the principle of the minimum number of WUS transmissions required. In this embodiment, a single WUS transmission is used either to trigger SIB1 and/or SSB transmission, or to trigger RACH monitoring. In an example embodiment:
for Cell1, no WUS needs to be transmitted; the UE can directly use the SSB of the first carrier as a reference and perform random access on Cell1;
for Cell2, two WUS transmissions are required to trigger SSB transmission and SIB1 transmission on Cell2;
for Cell3, two WUS transmissions are required to trigger SIB1 transmission and RACH monitoring on Cell3;
for Cell4, one WUS transmission is required to trigger RACH monitoring on Cell4; and
for Cell5, two WUS transmissions are required: one to trigger SSB and SIB1 transmissions, and one to trigger ARCH monitoring.

The random access method provided in embodiments of this application is described above. Corresponding to the above-described random access method, an embodiment of this application further provides a communication method, which is described below.

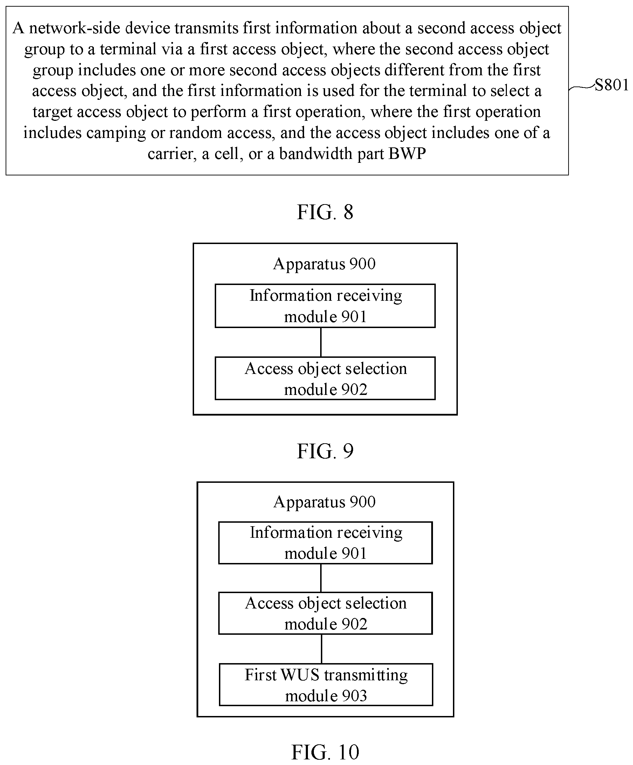

As shown in FIG. 8, an embodiment of this application provides a communication method. The method may include the following step:
Step 801: A network-side device transmits first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP.

The access object may include one of a carrier (carrier), a cell (Cell), or a bandwidth part (Bandwidth Part, BWP). The random access method provided in this embodiment of this application is directed to a multi-access-object scenario, which is illustrated below primarily through the example of a multi-carrier scenario.

In an implementation, in the multi-carrier scenario, the first access object may be an anchor carrier (anchor carrier), and the second access object may be a non-anchor carrier (non-anchor carrier). On the anchor carrier, a UE can obtain system information (system information) of the anchor carrier and necessary system information (necessary system information) of other non-anchor carriers. Moreover, the UE may perform at least one of random access (Random Access Channel, RACH), data transmission, or data reception on any anchor carrier or non-anchor carrier based on the system information obtained from the anchor carrier.

In another implementation, in the multi-carrier scenario, the first access object may be a carrier with normal SSB transmission, the second access object may be a carrier with no SSB transmission (SSB-less carrier), or the second access object may be a carrier with on-demand SSB transmission (on-demand SSB carrier). The first information may be transmitted by the first access object via a broadcast message. Alternatively, the first information is by default the same as information corresponding to the first access object.

The first information corresponds to at least one second access object in the second access object group, and the first information may include at least one of the following:
1) wake-up signal WUS configuration information that triggers SSB transmission on the at least one second access object, or WUS configuration information that triggers SSB adaptation for the at least one second access object, where the SSB includes at least one of a synchronization signal block or a physical broadcast channel block;
2) WUS configuration information that triggers SIB transmission on the at least one second access object, or WUS configuration information that triggers SIB adaptation for the at least one second access object;
3) WUS configuration information that triggers random access channel RACH monitoring for the at least one second access object, or WUS configuration information that triggers RACH monitoring adaptation for the at least one second access object;
4) relevant configuration information of an SSB currently transmitted on the at least one second access object, which may include at least one of the following:
   whether an SSB is currently transmitted on the at least one second access object;
   at least one of a frequency of an SSB that is being transmitted on the at least one second access object, an SSB transmission periodicity, or the number of SSBs within one transmission periodicity; and
   a transmission mode of an SSB that is being transmitted on the at least one second access object, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
5) relevant configuration information of an SIB currently transmitted on the at least one second access object, which may include at least one of the following:
   whether an SIB is transmitted on the at least one second access object;
   a transmission periodicity of an SIB that is being transmitted on the at least one second access object;
   configuration information of at least one of a physical downlink control channel PDCCH and a control resource set associated with an SIB that is being transmitted on the at least one second access object; and
   a transmission mode of an SIB that is being transmitted on the at least one second access object, where the transmission mode includes one of a normal transmission mode, an energy-saving transmission mode, a consolidated (compact) transmission mode, a long-periodicity transmission mode (with a longer SIB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SIB1s;
6) relevant configuration information of a RACH monitoring behavior currently occurring on the at least one second access object, which may include at least one of the following:
   whether RACH monitoring is performed on the at least one second access object;
   at least one of a transmission periodicity of a RACH currently monitored on the at least one second access object, the number of RACHs within one transmission periodicity, RACH frequency domain resource configuration information, or RACH time domain resource configuration information; and
   a monitoring mode of RACH monitoring on the at least one second access object, where the monitoring mode includes one of a normal monitoring mode, a reduced monitoring mode (for example, reduced RO transmission opportunities (reduced RO opportunity)), a consolidated monitoring mode, or an on-demand (on-demand) monitoring mode, where the reduced monitoring mode may include reduced RO transmission opportunities (reduced RO opportunity), the consolidated monitoring mode may be a monitoring mode in which no time-domain interval (gap) exists between a plurality of ROs, and RO is the abbreviation for physical random access channel occasion (PRACH Occasion);
7) relevant configuration information of an SSB transmitted after successful triggering by a WUS, which may include at least one of the following:
   at least one of a frequency of an SSB transmitted on the at least one second access object after successful triggering by a WUS, an SSB transmission periodicity, or the number of SSBs within one transmission periodicity;
   a monitoring window for an SSB transmitted on the at least one second access object after successful triggering by a WUS, that is, the UE monitors an SSB within the monitoring window;
   at least one time domain resource index or at least one time domain resource position of an SSB actually transmitted on the at least one second access object after successful triggering by a WUS;
   at least one of a transmission duration of an SSB transmitted on the at least one second access object after successful triggering by a WUS, the number of SSB transmissions, or the number of SSB transmission periods;
   a relative relationship between an SSB transmitted on the at least one second access object after successful triggering by a WUS and an SSB transmitted on the first access object in at least one of a time domain, a frequency domain, or a space domain;
   a time domain resource position of a first SSB or a first SIB transmitted on the at least one second access object after successful triggering by a WUS, for example, transmission is performed in the nearest SSB periodicity after X slots/symbols from the transmission time of the WUS; and
   a transmission mode of SSB transmission on the at least one second access object after successful triggering by a WUS, where the transmission mode includes one of a normal transmission mode, an energy-saving transmission mode (for example, transmitting only a PSS and an SSS), a consolidated transmission mode (for example, no time-domain interval exists between a plurality of SSBs), a long-periodicity transmission mode (with a relatively long SSB periodicity), or an on-demand (on-demand) transmission mode;
8) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
9) relevant configuration information of RACH monitoring after successful triggering by a WUS, which may include:
   at least one of a periodicity of RACH monitoring on the at least one second access object after successful triggering by a WUS, the number of RACHs to be monitored, frequency domain resource configuration information for the RACH monitoring, time domain resource configuration information for the RACH monitoring, or a monitoring mode of the RACH monitoring, where the monitoring mode includes one of a normal monitoring mode, a reduced monitoring mode (for example, reduced RO opportunities), a consolidated monitoring mode (no time-domain interval exists between a plurality of ROs), or an on-demand monitoring mode; and
10) characteristic information of the at least one second access object, which may include at least one of the following:
   identifier information of the at least one second access object;
   whether the at least one second access object can use the first access object as a reference access object;
   whether the at least one second access object is co-located (co-located) with the first access object;
   whether the at least one second access object is located in the same timing advance group (Timing Advance Group, TAG) as the first access object;
   whether the at least one second access object has a quasi co-location (Quasi Co-Location, QCL) relationship with the first access object;
   a reference access object for the at least one second access object;
   an access object co-located with the at least one second access object;
   an access object located in the same TAG as the at least one second access object;
   an access object having a QCL relationship with the at least one second access object;
   whether the at least one second access object is in a barring status;
   a priority of the at least one second access object when the UE performs random access channel selection;
   whether the at least one second access object is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second access object; for example, a UE for which (UE ID mod carrier number) = N can perform random access on the carrier;
   whether the at least one second access object supports UE camping;
   whether the at least one second access object is a suitable cell (suitable Cell);
   whether the at least one second access object supports cell selection and cell reselection; and
   partial system information of the at least one second access object, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

The WUS configuration information contained in the first information may include at least one of the following:
1) WUS synchronization reference configuration information, which may include at least one of the following:
   at least one of an SSB, a channel state information-reference signal (Channel State Information-Reference Signal, CSI-RS), or a tracking reference signal (tracking reference signal, TRS) of the first access object; and
   GPS timing (GPS timing).
2) WUS resource configuration information, which may include at least one of the following:
   time domain resource information;
   frequency domain resource information; and
   signal sequence configuration information, such as preamble grouping, which may indicate a preamble group index indicating that preambles in this group are used to trigger an SSB of the at least one second access object.
3) WUS power configuration information, which may include at least one of the following:
   initial signal power; and
   signal power ramp-up step size.
4) WUS repetition configuration information, which may include at least one of the following:
   repetition count for a single signal transmission; and
   maximum repetition count for channel transmission.
5) WUS spatial domain parameter configuration information, which may include at least one of the following:
   a correspondence between a WUS and an SSB of the first access object;
   a correspondence between a WUS and an SSB of the at least one second access object; and
   a correspondence between a WUS and an SSB of the second access object group.
6) WUS transmission timer (timer) configuration information, where the timer is used to prevent the WUS from being transmitted too frequently; and typically, the timer is started upon completion of the WUS transmission, and repeated transmission of the WUS is not allowed until the timer expires.

A form of the WUS signal includes at least one of the following:
RACH;
Msg1;
preamble sequence (preamble);
sounding reference signal (Sounding Reference Signal, SRS); and
physical uplink control channel (Physical Uplink Control Channel, PUCCH).

A configuration method for the WUS resource configuration information includes at least one of the following:
configuring a signal resource list in the first information, where each element in the signal resource list is in a one-to-one correspondence with an index size of the second access object or the second access object group, and one element in the signal resource list includes one or more resources;
configuring a signal resource list in the first information, where each element in the signal resource list explicitly corresponds to an index of the second access object or the second access object group;
configuring a candidate resource set in the first information, where one or more resources in the candidate resource set correspond to one resource number, one resource number corresponds to an index of one second access object or one second access object group, and the resource number is determined according to at least one of time domain, frequency domain, or space domain; and
configuring one or more signal resources for the second access object or the second access object group in the first information.

The signal resources configured by the WUS resource configuration information include at least one of the following:
time-frequency resources are the same as time-frequency resources of a common RACH on the first access object or the second access object group; that is, same time-frequency resources are shared with the common RACH on the first access object;
time-frequency resources are time-frequency resources of a dedicated RACH specifically used to trigger SSB/SIB transmission and/or RACH monitoring on the first access object or the second access object group, where the time-frequency resources of the dedicated RACH may be time-frequency resources completely different from the time-frequency resources of the common RACH on the first access object, or may be a portion of the time-frequency resources of the common RACH on the first access object; and
time-frequency resources are time-frequency resources of a dedicated SRS/PUCCH used to trigger SSB/SIB transmission and/or RACH monitoring on the first access object or the second access object group.

A grouping method for the second access object group includes at least one of the following:
configured by the network-side device; and
specified by the protocol.

A grouping rule for the second access object group includes at least one of the following:
second access objects within a same frequency band (band) form a group;
second access objects within a same frequency band interval form a group;
second access objects for which at least one of an initial BWP (Initial BWP), an active BWP (active BWP), an SSB, or an SCS is the same form a group;
second access objects with a same transmission mode form a group, where the transmission mode is related to at least one of whether to transmit an SSB, whether to perform RACH monitoring, whether transmission of an on-demand SSB (on-demand SSB) is supported, or the like;
second access objects that are co-located form a group; and
second access objects with a consistent SSB transmission periodicity form a group.

Regarding how the terminal selects the target access object to perform the first operation from the first access object and the second access object group based on the first information, refer to the embodiment shown in FIG. 2, which will not be repeated here.

According to the communication method provided in the embodiment shown in FIG. 8, the network-side device may provide the first information about the second access object group to the terminal via the first access object, where the first information includes the system information block SIB of the second access object, so that the terminal can select a target access object to perform camping or random access from the first access object and the second access object group based on the first information, eliminating the need for continuous transmission of information such as an SSB and SIB on the second access object. Instead, on-demand SSB transmission or on-demand RACH monitoring is performed. Therefore, the network-side capacity can be maximized as much as possible while saving energy on the network side.

Optionally, the target access object belongs to the second access object group, the first information includes the WUS configuration information that triggers the SSB/SIB transmission on the at least one second access object, or the WUS configuration information that triggers the SSB/SIB adaptation for the at least one second access object, and the first information includes the WUS configuration information that triggers the random access channel RACH monitoring for the at least one second access object, or the WUS configuration information that triggers the RACH monitoring adaptation for the at least one second access object. In this case, the communication method provided in this embodiment of this application may further include:
receiving, by the target access object, a wake-up signal WUS, where the WUS is used to trigger at least one of SSB transmission, SIB transmission, or RACH monitoring on the target access object.

In an example, the target access object receives the wake-up signal WUS, and the WUS is transmitted by the terminal in the case that a first condition is satisfied.

The first condition may include at least one of the following:
1) the first access object being not a suitable cell;
2) the target access object being a suitable cell;
3) intra-frequency (intra-frequency) or inter-frequency (inter-frequency) measurement being performed on the target access object;
4) the target access object being in a first energy-saving state, where the first energy-saving state includes at least one of no SSB transmission, no SIB transmission, no RACH monitoring, transmitting an energy-saving SSB (such as a sparse SSB), transmitting an energy-saving SIB (such as a sparse SIB), or energy-saving RACH monitoring (such as sparse RACH monitoring), and the energy-saving SSB includes one of a light SSB, a reduced SSB, a sparse SSB, or a long-periodicity SSB;
5) the terminal being sensitive to an access delay; and
6) the terminal being in a process of link failure recovery.

In another example, the wake-up signal WUS for the target access object is transmitted by the terminal in the case that the target access object is assumed to be in a second energy-saving state.

The second energy-saving state may include at least one of the following:
no SIB transmission, normal SSB transmission, and normal RACH monitoring;
no SIB transmission, no SSB transmission or transmitting an energy-saving SSB (for example, a reduced SSB or a sparse SSB), using the first access object as a reference, and normal RACH monitoring;
no SIB transmission, normal SSB transmission, and not performing normal RACH monitoring;
no SIB transmission, no SSB transmission or transmitting an energy-saving SSB (for example, a reduced SSB or a sparse SSB), and not performing normal RACH monitoring;
transmitting an SIB, normal SSB transmission, and not performing normal RACH monitoring;
transmitting an SIB, no SSB transmission or transmitting an energy-saving SSB, and not performing normal RACH monitoring;
transmitting an SIB, normal SSB transmission, and normal RACH monitoring; and
transmitting an SIB, no SSB transmission or transmitting an energy-saving SSB, and normal RACH monitoring.

The energy-saving SSB includes one of a light SSB, a reduced SSB, a sparse SSB, or a long-periodicity SSB.

In a first example, receiving, by the target access object, the wake-up signal WUS may include: receiving, by the target access object, one WUS, where the WUS may be used for two purposes: triggering SSB transmission and/or SIB transmission on the target access object, and triggering RACH monitoring on the target access object.

In a second example, receiving, by the target access object, the wake-up signal WUS may include: receiving, by the target access object, a first WUS, where the first WUS is used to trigger SSB transmission and/or SIB transmission on the target access object; and receiving, by the target access object, a second WUS, where the second WUS is used to trigger RACH monitoring on the target access object.

For example, receiving, by the target access object, the second WUS (a time point for receiving the second WUS) includes one of the following:
receiving, by the target access object, the second WUS that the terminal starts to transmit after Z slots/symbols/milliseconds from the transmission of the first WUS;
receiving, by the target access object, the second WUS that the terminal starts to transmit after X slots/symbols/milliseconds from the reception of feedback for the first WUS;
receiving, by the target access object, the second WUS that the terminal starts to transmit after Y slots/symbols/milliseconds from the reception of a first SSB or a first SIB transmitted on the target access object in response to successful triggering;
receiving, by the target access object, the second WUS that the terminal transmits when the number of transmissions of the first WUS reaches a maximum value; and
receiving, by the target access object, the second WUS that the terminal transmits upon the expiry of a first timer, where the first timer is started upon the transmission of the first WUS.

According to the communication method provided in this embodiment, the SSB transmission or the RACH monitoring on the second access object can be triggered on-demand (on-demand), instead of continuous SSB transmission or continuous RACH monitoring, or instead of no SSB transmission or no RACH monitoring. Therefore, the network-side capacity can be maximized as much as possible while saving energy for the network-side device.

Optionally, in the case that the WUS is used to trigger the SSB/SIB transmission on the target access object, the communication method provided in this embodiment of this application may further include: transmitting an SSB/SIB on the target access object. In this way, the SSB/SIB is transmitted on-demand on the target access object when triggered by the WUS, thereby preparing the UE to access the target access object and increasing the network-side capacity.

Optionally, the communication method provided in this embodiment of this application may further include:
monitoring, on the target access object, the first operation (for example, random access) initiated by the terminal.

Optionally, the communication method provided in this embodiment of this application may further include:
receiving, by the target access object, the WUS re-transmitted by the terminal in the case that a second condition is satisfied, to increase a success rate of the first operation.

The second condition may include, but is not limited to, at least one of the following:
1) SSB detection fails;
2) the maximum count for random access is reached, where
   the number of transmissions of the WUS is less than or equal to a preset maximum number of transmissions;
3) No feedback for the previous WUS is received;
4) The previous WUS is used to trigger SSB/SIB transmission, and after the reception of the feedback for the previous WUS signal, the WUS used to trigger RACH monitoring is re-transmitted (that is, the WUS is re-transmitted to trigger RACH monitoring); and
5) No feedback for the previous WUS is received before the timer expires.

Optionally, the WUS signal re-transmitted has at least one of the following characteristics:
1) increased signal power;
2) a transmission time interval with the previous WUS being greater than a preset time interval; and
3) the frequency domain resource and sequence resource being the same as those for the previous WUS.

The communication method, applied to the network-side device, that is provided in embodiments of this application is described above.

It should be noted that, the random access method or the communication method provided in embodiments of this application may be performed by a communication apparatus. In this embodiment of this application, a communication apparatus provided in an embodiment of this application is described through an example in which the communication apparatus performs the random access method.

A communication apparatus provided in an embodiment of this application is described below with reference to the accompanying drawings. Since the communication apparatus provided in the embodiment of this application corresponds to the random access method provided in the embodiment of this application, the description of the communication apparatus is relatively brief. For details, refer to the foregoing description of the method embodiment.

As shown in FIG. 9, an embodiment of this application provides a random access apparatus 900. The apparatus 900 may include an information receiving module 901 and an access object selection module 902.

The information receiving module 901 is configured to receive first information about a second access object group transmitted by a network-side device via a first access object, where the second access object group includes one or more second access objects different from the first access object.

The access object may include one of a carrier (carrier), a cell (Cell), or a bandwidth part (Bandwidth Part, BWP). The random access method provided in this embodiment of this application is directed to a multi-access-object scenario, which is illustrated below primarily through the example of a multi-carrier scenario.

In an implementation, in the multi-carrier scenario, the first access object may be an anchor carrier (anchor carrier), and the second access object may be a non-anchor carrier (non-anchor carrier). On the anchor carrier, a UE can obtain system information (system information) of the anchor carrier and necessary system information (necessary system information) of other non-anchor carriers. Moreover, the UE may perform at least one of random access (Random Access Channel, RACH), data transmission, or data reception on any anchor carrier or non-anchor carrier based on the system information obtained from the anchor carrier.

In another implementation, in the multi-carrier scenario, the first access object may be a carrier with normal SSB transmission, the second access object may be a carrier with no SSB transmission (SSB-less carrier), or the second access object may be a carrier with on-demand SSB transmission (on-demand SSB carrier). In this embodiment of this application, the SSB includes at least one of a synchronization signal block (Synchronization Signal Block, SSB) or a physical broadcast channel block (Physical Broadcast Channel block).

The first information corresponds to at least one second access object in the second access object group, and the first information may include at least one of the following:
1) wake-up signal WUS configuration information that triggers SSB transmission on the at least one second access object, or WUS configuration information that triggers SSB adaptation for the at least one second access object, where the SSB includes at least one of a synchronization signal block or a physical broadcast channel block;
2) WUS configuration information that triggers SIB transmission on the at least one second access object, or WUS configuration information that triggers SIB adaptation for the at least one second access object;
3) WUS configuration information that triggers random access channel RACH monitoring for the at least one second access object, or WUS configuration information that triggers RACH monitoring adaptation for the at least one second access object;
4) relevant configuration information of an SSB currently transmitted on the at least one second access object, which may include at least one of the following:
   whether an SSB is currently transmitted on the at least one second access object;
   at least one of a frequency of an SSB that is being transmitted on the at least one second access object, an SSB transmission periodicity, or the number of SSBs within one transmission periodicity; and
   a transmission mode of an SSB that is being transmitted on the at least one second access object, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
5) relevant configuration information of an SIB currently transmitted on the at least one second access object, which may include at least one of the following:
   whether an SIB is transmitted on the at least one second access object;
   a transmission periodicity of an SIB that is being transmitted on the at least one second access object;
   configuration information of at least one of a physical downlink control channel PDCCH and a control resource set associated with an SIB that is being transmitted on the at least one second access object; and
   a transmission mode of an SIB that is being transmitted on the at least one second access object, where the transmission mode includes one of a normal transmission mode, an energy-saving transmission mode, a consolidated (compact) transmission mode, a long-periodicity transmission mode (with a longer SIB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SIB1s;
6) relevant configuration information of a RACH monitoring behavior currently occurring on the at least one second access object, which may include at least one of the following:
   whether RACH monitoring is performed on the at least one second access object;
   at least one of a transmission periodicity of a RACH currently monitored on the at least one second access object, the number of RACHs within one transmission periodicity, RACH frequency domain resource configuration information, or RACH time domain resource configuration information; and
   a monitoring mode of RACH monitoring on the at least one second access object, where the monitoring mode includes one of a normal monitoring mode, a reduced monitoring mode (for example, reduced RO transmission opportunities (reduced RO opportunity)), a consolidated monitoring mode, or an on-demand (on-demand) monitoring mode, where the reduced monitoring mode may include reduced RO transmission opportunities (reduced RO opportunity), the consolidated monitoring mode may be a monitoring mode in which no time-domain interval (gap) exists between a plurality of ROs, and RO is the abbreviation for physical random access channel occasion (PRACH Occasion);
7) relevant configuration information of an SSB transmitted after successful triggering by a WUS, which may include at least one of the following:
   at least one of a frequency of an SSB transmitted on the at least one second access object after successful triggering by a WUS, an SSB transmission periodicity, or the number of SSBs within one transmission periodicity;
   a monitoring window for an SSB transmitted on the at least one second access object after successful triggering by a WUS, that is, the UE monitors an SSB within the monitoring window;
   at least one time domain resource index or at least one time domain resource position of an SSB actually transmitted on the at least one second access object after successful triggering by a WUS;
   at least one of a transmission duration of an SSB transmitted on the at least one second access object after successful triggering by a WUS, the number of SSB transmissions, or the number of SSB transmission periods;
   a relative relationship between an SSB transmitted on the at least one second access object after successful triggering by a WUS and an SSB transmitted on the first access object in at least one of a time domain, a frequency domain, or a space domain;
   a time domain resource position of a first SSB or a first SIB transmitted on the at least one second access object after successful triggering by a WUS, for example, transmission is performed in the nearest SSB periodicity after X slots/symbols from the transmission time of the WUS; and
   a transmission mode of SSB transmission on the at least one second access object after successful triggering by a WUS, where the transmission mode includes one of a normal transmission mode, an energy-saving transmission mode (for example, transmitting only a PSS and an SSS), a consolidated transmission mode (for example, no time-domain interval exists between a plurality of SSBs), a long-periodicity transmission mode (with a relatively long SSB periodicity), or an on-demand (on-demand) transmission mode;
8) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
9) relevant configuration information of RACH monitoring after successful triggering by a WUS, which may include:
   at least one of a periodicity of RACH monitoring on the at least one second access object after successful triggering by a WUS, the number of RACHs to be monitored, frequency domain resource configuration information for the RACH monitoring, time domain resource configuration information for the RACH monitoring, or a monitoring mode of the RACH monitoring, where the monitoring mode includes one of a normal monitoring mode, a reduced monitoring mode (for example, reduced RO opportunities), a consolidated monitoring mode (no time-domain interval exists between a plurality of ROs), or an on-demand monitoring mode; and
10) characteristic information of the at least one second access object, which may include at least one of the following:
   identifier information of the at least one second access object;
   whether the at least one second access object can use the first access object as a reference access object;
   whether the at least one second access object is co-located (co-located) with the first access object;
   whether the at least one second access object is located in the same timing advance group (Timing Advance Group, TAG) as the first access object;
   whether the at least one second access object has a quasi co-location (Quasi Co-Location, QCL) relationship with the first access object;
   a reference access object for the at least one second access object;
   an access object co-located with the at least one second access object;
   an access object located in the same TAG as the at least one second access object;
   an access object having a QCL relationship with the at least one second access object;
   whether the at least one second access object is in a barring status;
   a priority of the at least one second access object when the UE performs random access channel selection;
   whether the at least one second access object is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second access object; for example, a UE for which (UE ID mod carrier number) = N can perform random access on the carrier;
   whether the at least one second access object supports UE camping;
   whether the at least one second access object is a suitable cell (suitable Cell);
   whether the at least one second access object supports cell selection and cell reselection; and
   partial system information of the at least one second access object, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

The WUS configuration information contained in the first information may include at least one of the following:
1) WUS synchronization reference configuration information, which may include at least one of the following:
   at least one of an SSB, a channel state information-reference signal (Channel State Information-Reference Signal, CSI-RS), or a tracking reference signal (tracking reference signal, TRS) of the first access object; and
   GPS timing (GPS timing).
2) WUS resource configuration information, which may include at least one of the following:
   time domain resource information;
   frequency domain resource information; and
   signal sequence configuration information, such as preamble grouping, which may indicate a preamble group index indicating that preambles in this group are used to trigger an SSB of the at least one second access object.
3) WUS power configuration information, which may include at least one of the following:
   initial signal power; and
   signal power ramp-up step size.
4) WUS repetition configuration information, which may include at least one of the following:
   repetition count for a single signal transmission; and
   maximum repetition count for channel transmission.
5) WUS spatial domain parameter configuration information, which may include at least one of the following:
   a correspondence between a WUS and an SSB of the first access object;
   a correspondence between a WUS and an SSB of the at least one second access object; and
   a correspondence between a WUS and an SSB of the second access object group.
6) WUS transmission timer (timer) configuration information, where the timer is used to prevent the WUS from being transmitted too frequently; and typically, the timer is started upon completion of the WUS transmission, and repeated transmission of the WUS is not allowed until the timer expires.

A form of the WUS signal includes at least one of the following:
RACH;
Msg1;
preamble sequence (preamble);
sounding reference signal (Sounding Reference Signal, SRS); and
physical uplink control channel (Physical Uplink Control Channel, PUCCH).

A configuration method for the WUS resource configuration information includes at least one of the following:
configuring a signal resource list in the first information, where each element in the signal resource list is in a one-to-one correspondence with an index size of the second access object or the second access object group, and one element in the signal resource list includes one or more resources;
configuring a signal resource list in the first information, where each element in the signal resource list explicitly corresponds to an index of the second access object or the second access object group;
configuring a candidate resource set in the first information, where one or more resources in the candidate resource set correspond to one resource number, one resource number corresponds to an index of one second access object or one second access object group, and the resource number is determined according to at least one of time domain, frequency domain, or space domain; and
configuring one or more signal resources for the second access object or the second access object group in the first information.

The signal resources configured by the WUS resource configuration information include at least one of the following:
time-frequency resources are the same as time-frequency resources of a common RACH on the first access object or the second access object group; that is, same time-frequency resources are shared with the common RACH on the first access object;
time-frequency resources are time-frequency resources of a dedicated RACH specifically used to trigger SSB/SIB transmission and/or RACH monitoring on the first access object or the second access object group, where the time-frequency resources of the dedicated RACH may be time-frequency resources completely different from the time-frequency resources of the common RACH on the first access object, or may be a portion of the time-frequency resources of the common RACH on the first access object; and
time-frequency resources are time-frequency resources of a dedicated SRS/PUCCH used to trigger SSB/SIB transmission and/or RACH monitoring on the first access object or the second access object group.

A grouping method for the second access object group includes at least one of the following:
configured by the network-side device; and
specified by the protocol.

A grouping rule for the second access object group includes at least one of the following:
second access objects within a same frequency band (band) form a group;
second access objects within a same frequency band interval form a group;
second access objects for which at least one of an initial BWP (Initial BWP), an active BWP (active BWP), an SSB, or an SCS is the same form a group;
second access objects with a same transmission mode form a group, where the transmission mode is related to at least one of whether to transmit an SSB, whether to perform RACH monitoring, whether transmission of an on-demand SSB (on-demand SSB) is supported, or the like;
second access objects that are co-located form a group; and
second access objects with a consistent SSB transmission periodicity form a group.

The access object selection module 902 is configured to select a target access object to perform a first operation from the first access object and the second access object group based on the first information and a first rule, where the first operation includes camping or random access, and the access object includes one of a carrier, a cell, or a bandwidth part BWP.

The first rule may be related to at least one of the following:
one or more access objects that are indicated or configured by the network-side device and that can be randomly accessed by the terminal;
an access object to be randomly accessed by the terminal being the first access object by default;
barring status information of the second access object;
an index value of the second access object;
a center frequency of the second access object;
a subcarrier spacing (SubCarrier Spacing, SCS) of the second access object;
an identifier of the second access object;
a frequency interval between the second access object and the first access object;
whether normal RACH monitoring is performed on the second access object;
whether normal SSB transmission is performed on the second access object;
whether normal SIB transmission is performed on the second access object;
whether at least two of normal RACH monitoring, normal SSB transmission, or normal SIB transmission being performed on the second access object are satisfied;
a number of required WUS transmissions to the second access object;
a priority of the second access object;
a measurement value of signal strength of a reference signal of the second access object, where the signal strength includes at least one of a reference signal received power (Reference Signal Receiving Power, RSRP) or a signal-to-interference-plus-noise ratio (Signal to Interference plus Noise Ratio, SINR);
a randomly generated access object index;
a weight value of the second access object;
a randomly generated access object weight value;
whether the first access object is a suitable cell; and
whether the second access object is a suitable cell.

The priority of the second access object may be explicitly indicated by the network-side device. Alternatively, the priority of the second access object is related to at least one of the following:
① a transmission mode of the second access object, where the transmission mode includes one of whether normal SSB transmission is performed, whether transmission of an on-demand SSB is supported, or whether normal RACH monitoring is performed. For example, a relationship between the priority of the second access object and the transmission mode may be as follows:
   a priority of a second access object on which normal SSB transmission is performed > a priority of a second access object that uses the first access object as a reference and on which no SSB transmission is performed > a priority of a second access object on which transmission of an on-demand SSB is performed;
   a priority of a second access object on which normal SIB transmission is performed > a priority of a second access object on which transmission of an on-demand SIB is performed; and
   a priority of a second access object on which normal RACH monitoring is performed > a priority of a second access object on which on-demand RACH monitoring is performed;
② a size of a frequency band interval between the second access object and the first access object; and
③ a number of the second access object.

Two examples are provided below to describe how the access object selection module 902 selects the target access object to perform the first operation from the first access object and the second access object group based on the first information and the first rule. Other examples may also be involved in the following embodiment, and they are not described here. For details, refer to the following descriptions.

### First example

The access object selection module 902 may be configured to:
determine whether the first access object is a suitable cell; and
in the case that the first access object is a suitable cell, select the first access object as the target access object; or
in the case that the first access object is not a suitable cell, perform one of a first step, a second step, or a third step.

The first step includes:
determining whether the at least one second access object is a suitable cell, based on a reference signal measurement result corresponding to the at least one second access object in the second access object group and a system information block SIB transmitted on the at least one second access object in response to triggering by a WUS; and
in the case that one or more of the at least one second access object are suitable cells, selecting, according to the first rule, a suitable cell from the at least one second access object as the target access object to perform the first operation.

The second step includes:
determining whether the at least one second access object is a suitable cell, based on a reference signal measurement result corresponding to the at least one second access object in the second access object group and a partial SIB of the at least one second access object included in the first information; and
in the case that one or more of the at least one second access object are suitable cells, selecting, according to the first rule, a suitable cell from the at least one second access object, and in the case that the terminal does not obtain an SIB of the suitable cell, transmitting, to the suitable cell, a WUS that triggers SIB transmission, and after receiving the SIB, using the suitable cell as the target access object to perform the first operation.

The third step includes:
ignoring the second access object and searching for another suitable cell as the target access object to perform the operation.

Further, searching for the another suitable cell as the target access object to perform the first operation may include:
searching one or more second access objects in the second access object group for a suitable cell as the target access object to perform the operation; and
searching one or more third access objects in a third access object group for a suitable cell as the target access object to perform the operation, where the third access object group includes an access object that satisfies a third condition,
where the third condition includes at least one of the following:
   using the first access object as a reference;
   being co-located with the first access object; and
   being contiguous access objects on the same frequency band as the first access object.

### Second example

The access object selection module 902 may be configured to perform a fourth step or a fifth step.

The fourth step includes:
determining whether the first access object is a suitable cell, based on a reference signal measurement result of the first access object and a system information block SIB of the first access object;
determining whether the at least one second access object is a suitable cell, based on a reference signal measurement result of the at least one second access object in the second access object group and a partial SIB of the at least one second access object included in the first information;
in the case that the first access object is a suitable cell, and that one or more of the at least one second access object are suitable cells, selecting a suitable cell from the first access object and the at least one second access object according to the first rule; and
if the suitable cell is the first access object, using the suitable cell as the target access object to perform the first operation; or
if the suitable cell is the second access object, transmitting, to the suitable cell, a WUS that triggers SIB transmission, and after receiving the SIB, using the suitable cell as the target access object to perform the first operation.

The fifth step includes:
determining whether the first access object is a suitable cell, based on a reference signal measurement result of the first access object and an SIB of the first access object;
determining whether the at least one second access object is a suitable cell, based on a reference signal measurement result of the at least one second access object in the second access object group and an SIB transmitted on the at least one second access object in response to triggering by a WUS; and
in the case that the first access object is a suitable cell, and that one or more of the at least one second access object are suitable cells, selecting, according to the first rule, a suitable cell from the first access object and the at least one second access object as the target access object to perform the first operation.

In this embodiment of this application, a reference signal corresponding to a second access object may include at least one of an SSB, a CSI-RS, a DRS, a TRS, or another reference signal. Moreover, in the case that the reference signal is an SSB, for a second access object, if there is SSB transmission on the second access object, SSB measurement is directly performed on the second access object to obtain an SSB measurement result. If there is no SSB transmission on the second access object, an SSB measurement result transmitted on a fourth access object is used as an SSB measurement result of the second access object, where the fourth access object may include one of a reference access object configured for the second access object, an access object co-located with the second access object, or an access object that is in the same frequency band as and contiguous with the second access object. Alternatively, if there is no SSB transmission on the second access object, an SSB measurement result transmitted on the second access object after successful triggering by a WUS is used as an SSB measurement result of the second access object.

According to the random access apparatus provided in the embodiment shown in FIG. 9, the network-side device may provide the first information about the second access object group to the terminal via the first access object, so that the terminal can select a target access object to perform camping or random access from the first access object and the second access object group based on the first information and the first rule, eliminating the need for continuous transmission of information such as an SSB and SIB on the second access object. Instead, on-demand SSB/SIB transmission or on-demand RACH monitoring is performed. Therefore, the network-side capacity can be maximized as much as possible while saving energy on the network side.

Optionally, as shown in FIG. 10, the random access apparatus 900 provided in this embodiment of this application may further include:
a first WUS transmitting module 903, configured to transmit a wake-up signal WUS for the target access object, in the following case: the target access object belongs to the second access object group, the first information includes the WUS configuration information that triggers the SSB/SIB transmission on the at least one second access object, or the WUS configuration information that triggers the SSB/SIB adaptation for the at least one second access object, and the first information includes the WUS configuration information that triggers the random access channel RACH monitoring for the at least one second access object, or the WUS configuration information that triggers the RACH monitoring adaptation for the at least one second access object, where the WUS is used to trigger at least one of SSB transmission, SIB transmission, or RACH monitoring on the target access object.

In an example, the first WUS transmitting module 903 is configured to transmit a WUS for the target access object in the case that a first condition is satisfied.

The first condition may include at least one of the following:
1) the first access object being not a suitable cell;
2) the target access object being a suitable cell;
3) intra-frequency (intra-frequency) or inter-frequency (inter-frequency) measurement being performed on the target access object;
4) the target access object being in a first energy-saving state, where the first energy-saving state includes at least one of no SSB transmission, no SIB transmission, no RACH monitoring, transmitting an energy-saving SSB (such as a sparse SSB), transmitting an energy-saving SIB (such as a sparse SIB), or energy-saving RACH monitoring (such as sparse RACH monitoring), and the energy-saving SSB includes one of a light SSB, a reduced SSB, a sparse SSB, or a long-periodicity SSB;
5) the terminal being sensitive to an access delay; and
6) the terminal being in a process of link failure recovery.

In another example, the apparatus may further include an assumption module, configured to: before the transmitting of the WUS for the target access object, assume that the target access object is in a second energy-saving state.

The second energy-saving state may include at least one of the following:
no SIB transmission, normal SSB transmission, and normal RACH monitoring;
no SIB transmission, no SSB transmission or transmitting an energy-saving SSB (for example, a reduced SSB or a sparse SSB), using the first access object as a reference, and normal RACH monitoring;
no SIB transmission, normal SSB transmission, and not performing normal RACH monitoring;
no SIB transmission, no SSB transmission or transmitting an energy-saving SSB (for example, a reduced SSB or a sparse SSB), and not performing normal RACH monitoring;
transmitting an SIB, normal SSB transmission, and not performing normal RACH monitoring;
transmitting an SIB, no SSB transmission or transmitting an energy-saving SSB, and not performing normal RACH monitoring;
transmitting an SIB, normal SSB transmission, and normal RACH monitoring; and
transmitting an SIB, no SSB transmission or transmitting an energy-saving SSB, and normal RACH monitoring.

The energy-saving SSB includes one of a light SSB, a reduced SSB, a sparse SSB, or a long-periodicity SSB.

In a first example, the first WUS transmitting module 903 may be configured to transmit one WUS for the target access object, where the WUS may be used for two purposes: triggering SSB transmission and/or SIB transmission on the target access object, and triggering RACH monitoring on the target access object.

In a second example, the first WUS transmitting module 903 may be configured to transmit a first WUS for the target access object, where the first WUS is used to trigger SSB transmission and/or SIB transmission on the target access object; and transmitting, by the terminal, a second WUS for the target access object, where the second WUS is used to trigger RACH monitoring on the target access object.

For example, the first WUS transmitting module 903 may be configured to perform one of the following:
starting, after Z slots/symbols/milliseconds from the transmission of the first WUS, transmission of the second WUS for the target access object;
starting, after X slots/symbols/milliseconds from the reception of feedback for the first WUS, transmission of the second WUS for the target access object;
starting, after Y slots/symbols/milliseconds from the reception of a first SSB or a first SIB transmitted on the target access object in response to successful triggering, transmission of the second WUS for the target access object;
transmitting, when the number of transmissions of the first WUS reaches a maximum value, the second WUS for the target access object; and
starting a first timer upon the transmission of the first WUS, and transmitting, upon the expiry of the first timer, the second WUS for the target access object.

According to the random access apparatus 900 provided in the embodiment shown in FIG. 10, the SSB transmission or the RACH monitoring on the second access object can be triggered on-demand (on-demand), instead of continuous SSB transmission or continuous RACH monitoring, or instead of no SSB transmission or no RACH monitoring. Therefore, the network-side capacity can be maximized as much as possible while saving energy for the network-side device.

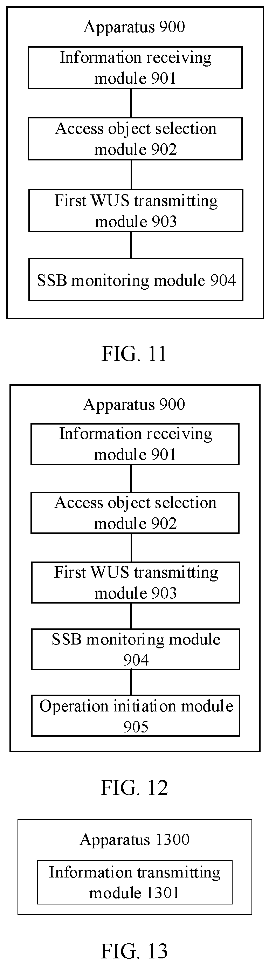

Optionally, as shown in FIG. 11, the random access apparatus 900 provided in this embodiment of this application may further include:
an SSB monitoring module 904, configured to monitor the SSB/SIB transmitted on the target access object in the case that the WUS is used to trigger the SSB/SIB transmission.

For example, the SSB monitoring module 904 may be configured to perform one of the following:
starting a third timer upon completion of the WUS transmission, and starting, upon the expiry of the third timer, the monitoring of the SSB/SIB transmitted on the target access object;
starting, after C slots/symbols/milliseconds from the completion of the WUS transmission, the monitoring of the SSB/SIB transmitted on the target access object;
starting, in a next slot after the WUS transmission, the monitoring of the SSB/SIB transmitted on the target access object; and
monitoring, within an SSB/SIB monitoring window configured in the first information, the SSB/SIB transmitted on the target access object.

According to the random access apparatus 900 provided in the embodiment shown in FIG. 11, the SSB/SIB transmission on the target access object (one second access object) can be triggered on-demand (on-demand). This enables preparation for performing RACH on the target access object, increasing the network-side capacity.

Optionally, as shown in FIG. 12, the random access apparatus 900 provided in this embodiment of this application may further include:
an operation initiation module 905, configured to initiate the first operation to the target access object.

For example, the target access object is one second access object, and the operation initiation module 905 (a time point for initiating the first operation to the target access object) may be configured to perform one of the following:
starting a second timer upon the WUS transmission to the target access object, and initiating, upon the expiry of the second timer, the first operation to the target access object (for example, initiating RACH, and accordingly, the WUS may be a same WUS used to trigger SSB transmission and RACH monitoring, or may be the second WUS);
initiating, after A slots/symbols/milliseconds from the WUS transmission to the target access object, the first operation to the target access object (for example, initiating RACH, and accordingly, the WUS may be a same WUS used to trigger SSB transmission and RACH monitoring, or may be the second WUS); and
initiating, after B slots/symbols/milliseconds from the reception of feedback for the WUS for the target access object, the first operation to the target access object (for example, initiating RACH, and accordingly, the WUS may be a same WUS used to trigger SSB transmission and RACH monitoring, or may be the second WUS).

Optionally, the random access apparatus 900 provided in this embodiment of this application may further include:
a second WUS transmitting module, configured to re-transmit the wake-up signal WUS for the target access object in the case that a second condition is satisfied.

The second condition may include, but is not limited to, at least one of the following:
1) SSB detection fails;
2) the maximum count for random access is reached, where
   the number of transmissions of the WUS is less than or equal to a preset maximum number of transmissions;
3) No feedback for the previous WUS is received;
4) The previous WUS is used to trigger SSB/SIB transmission, and after the reception of the feedback for the previous WUS signal, the WUS used to trigger RACH monitoring is re-transmitted (that is, the WUS is re-transmitted to trigger RACH monitoring); and
5) No feedback for the previous WUS is received before the timer expires.

Optionally, the WUS signal re-transmitted has at least one of the following characteristics:
1) increased signal power;
2) a transmission time interval with the previous WUS being greater than a preset time interval; and
3) the frequency domain resource and sequence resource being the same as those for the previous WUS.

It should be noted that the apparatus shown in FIG. 9 can implement the method shown in FIG. 2 and achieve the same technical effects, and therefore is relatively briefly described. For related parts, refer to the foregoing descriptions of the embodiment shown in FIG. 2.

As shown in FIG. 13, an embodiment of this application provides a communication apparatus 1300. The apparatus 1300 may include an information transmitting module 1301.

The information transmitting module 1301 is configured to transmit first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP.

The access object may include one of a carrier (carrier), a cell (Cell), or a bandwidth part (Bandwidth Part, BWP). The random access method provided in this embodiment of this application is directed to a multi-access-object scenario, which is illustrated below primarily through the example of a multi-carrier scenario.

In an implementation, in the multi-carrier scenario, the first access object may be an anchor carrier (anchor carrier), and the second access object may be a non-anchor carrier (non-anchor carrier). On the anchor carrier, a UE can obtain system information (system information) of the anchor carrier and necessary system information (necessary system information) of other non-anchor carriers. Moreover, the UE may perform at least one of random access (Random Access Channel, RACH), data transmission, or data reception on any anchor carrier or non-anchor carrier based on the system information obtained from the anchor carrier.

In another implementation, in the multi-carrier scenario, the first access object may be a carrier with normal SSB transmission, the second access object may be a carrier with no SSB transmission (SSB-less carrier), or the second access object may be a carrier with on-demand SSB transmission (on-demand SSB carrier). The first information may be transmitted by the first access object via a broadcast message. Alternatively, the first information is by default the same as information corresponding to the first access object.

The first information corresponds to at least one second access object in the second access object group, and the first information may include at least one of the following:
1) wake-up signal WUS configuration information that triggers SSB transmission on the at least one second access object, or WUS configuration information that triggers SSB adaptation for the at least one second access object, where the SSB includes at least one of a synchronization signal block or a physical broadcast channel block;
2) WUS configuration information that triggers SIB transmission on the at least one second access object, or WUS configuration information that triggers SIB adaptation for the at least one second access object;
3) WUS configuration information that triggers random access channel RACH monitoring for the at least one second access object, or WUS configuration information that triggers RACH monitoring adaptation for the at least one second access object;
4) relevant configuration information of an SSB currently transmitted on the at least one second access object, which may include at least one of the following:
   whether an SSB is currently transmitted on the at least one second access object;
   at least one of a frequency of an SSB that is being transmitted on the at least one second access object, an SSB transmission periodicity, or the number of SSBs within one transmission periodicity; and
   a transmission mode of an SSB that is being transmitted on the at least one second access object, where the transmission mode includes one of a normal transmission mode, an energy-saving transmission mode, a consolidated (compact) transmission mode, a long-periodicity transmission mode (with a longer SSB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SSBs;
5) relevant configuration information of an SIB currently transmitted on the at least one second access object, which may include at least one of the following:
   whether an SIB is transmitted on the at least one second access object;
   a transmission periodicity of an SIB that is being transmitted on the at least one second access object;
   configuration information of at least one of a physical downlink control channel PDCCH and a control resource set associated with an SIB that is being transmitted on the at least one second access object; and
   a transmission mode of an SIB that is being transmitted on the at least one second access object, where the transmission mode includes one of a normal transmission mode, an energy-saving transmission mode, a consolidated (compact) transmission mode, a long-periodicity transmission mode (with a longer SIB transmission periodicity), or an on-demand (on-demand) transmission mode, where the energy-saving transmission mode may be a reduced transmission mode in which only a primary synchronization signal (Primary Synchronization Signal, PSS) and a secondary synchronization signal (Secondary Synchronization Signal, SSS) are transmitted, and the consolidated transmission mode may be a transmission mode in which no time-domain interval (gap) exists between a plurality of SIB1s;
6) relevant configuration information of a RACH monitoring behavior currently occurring on the at least one second access object, which may include at least one of the following:
   whether RACH monitoring is performed on the at least one second access object;
   at least one of a transmission periodicity of a RACH currently monitored on the at least one second access object, the number of RACHs within one transmission periodicity, RACH frequency domain resource configuration information, or RACH time domain resource configuration information; and
   a monitoring mode of RACH monitoring on the at least one second access object, where the monitoring mode includes one of a normal monitoring mode, a reduced monitoring mode (for example, reduced RO transmission opportunities (reduced RO opportunity)), a consolidated monitoring mode, or an on-demand (on-demand) monitoring mode, where the reduced monitoring mode may include reduced RO transmission opportunities (reduced RO opportunity), the consolidated monitoring mode may be a monitoring mode in which no time-domain interval (gap) exists between a plurality of ROs, and RO is the abbreviation for physical random access channel occasion (PRACH Occasion);
7) relevant configuration information of an SSB transmitted after successful triggering by a WUS, which may include at least one of the following:
   at least one of a frequency of an SSB transmitted on the at least one second access object after successful triggering by a WUS, an SSB transmission periodicity, or the number of SSBs within one transmission periodicity;
   a monitoring window for an SSB transmitted on the at least one second access object after successful triggering by a WUS, that is, the UE monitors an SSB within the monitoring window;
   at least one time domain resource index or at least one time domain resource position of an SSB actually transmitted on the at least one second access object after successful triggering by a WUS;
   at least one of a transmission duration of an SSB transmitted on the at least one second access object after successful triggering by a WUS, the number of SSB transmissions, or the number of SSB transmission periods;
   a relative relationship between an SSB transmitted on the at least one second access object after successful triggering by a WUS and an SSB transmitted on the first access object in at least one of a time domain, a frequency domain, or a space domain;
   a time domain resource position of a first SSB or a first SIB transmitted on the at least one second access object after successful triggering by a WUS, for example, transmission is performed in the nearest SSB periodicity after X slots/symbols from the transmission time of the WUS; and
   a transmission mode of SSB transmission on the at least one second access object after successful triggering by a WUS, where the transmission mode includes one of a normal transmission mode, an energy-saving transmission mode (for example, transmitting only a PSS and an SSS), a consolidated transmission mode (for example, no time-domain interval exists between a plurality of SSBs), a long-periodicity transmission mode (with a relatively long SSB periodicity), or an on-demand (on-demand) transmission mode;
8) relevant configuration information of an SIB transmitted after successful triggering by a WUS, which may include at least one of the following:
   a transmission periodicity of an SIB transmitted on the at least one second object after successful triggering by a WUS, and configuration information of at least one of a physical downlink control channel (Physical Downlink Control Channel, PDCCH) carrying scheduling information for the SIB, or a control resource set (CORESET);
   a monitoring window for an SIB transmitted on the at least one second object after successful triggering by a WUS, that is, the UE monitors an SIB within the monitoring window;
   one of a transmission duration, the number of transmissions, or the number of transmission periods of an SIB transmitted on the at least one second object after successful triggering by a WUS, for example, one of a transmission duration, the number of transmissions, and the number of transmission periods of an SIB1;
   frequency domain resource information of an SIB transmitted on the at least one second object after successful triggering by a WUS, where the frequency domain resource information includes at least one of a frequency domain resource start position (for example, a carrier or BWP in which the SIB is located, or a position of a frequency band in which the SIB is located), the number of frequency bands occupied by the frequency domain resource, or a signal bandwidth;
   time domain resource information of an SIB transmitted on the at least one second object after successful triggering by a WUS, where the time domain resource information includes at least one of a time domain resource position (for example, an offset relative to a synchronization/broadcast channel), a size of a monitoring window, a periodicity of the monitoring window, the number of repetitions in the time domain, or a time-domain repetition mode; and
   a transmission mode of SIB transmission on the at least one second object after successful triggering by a WUS, where the transmission mode includes one of a normal transmission mode, an energy-saving transmission mode, a consolidated transmission mode, a long-periodicity transmission mode, or an on-demand transmission mode, where the energy-saving transmission mode may be a reduced transmission mode in which only core configuration information such as RACH is transmitted, and the consolidated transmission mode may be a transmission mode in which no time-domain interval (gap) exists between a plurality of SIB1s;
9) relevant configuration information of RACH monitoring after successful triggering by a WUS, which may include:
   at least one of a periodicity of RACH monitoring on the at least one second access object after successful triggering by a WUS, the number of RACHs to be monitored, frequency domain resource configuration information for the RACH monitoring, time domain resource configuration information for the RACH monitoring, or a monitoring mode of the RACH monitoring, where the monitoring mode includes one of a normal monitoring mode, a reduced monitoring mode (for example, reduced RO opportunities), a consolidated monitoring mode (no time-domain interval exists between a plurality of ROs), or an on-demand monitoring mode; and
10) characteristic information of the at least one second access object, which may include at least one of the following:
   identifier information of the at least one second access object;
   whether the at least one second access object can use the first access object as a reference access object;
   whether the at least one second access object is co-located (co-located) with the first access object;
   whether the at least one second access object is located in the same timing advance group (Timing Advance Group, TAG) as the first access object;
   whether the at least one second access object has a quasi co-location (Quasi Co-Location, QCL) relationship with the first access object;
   a reference access object for the at least one second access object;
   an access object co-located with the at least one second access object;
   an access object located in the same TAG as the at least one second access object;
   an access object having a QCL relationship with the at least one second access object;
   whether the at least one second access object is in a barring status;
   a priority of the at least one second access object when the UE performs random access channel selection;
   whether the at least one second access object is set to a barring status for UEs of a first type, where the first type includes at least one of reduced capability (Reduced Capability, Redcap), non-terrestrial network (Non-Terrestrial Network, NTN), or network energy saving (Network Energy Saving, NES) capability;
   a characteristic value N of a UE ID for which random access is allowed on the at least one second access object; for example, a UE for which (UE ID mod carrier number) = N can perform random access on the carrier;
   whether the at least one second access object supports UE camping;
   whether the at least one second access object is a suitable cell (suitable Cell);
   whether the at least one second access object supports cell selection and cell reselection; and
   partial system information of the at least one second access object, where the partial system information includes at least one of public land mobile network (Public Land Mobile Network, PLMN) information, configuration information related to cell selection (Cell selection) criteria, configuration information related to cell reselection (Cell reselection) criteria, or cell barring (Cell Bar) information.

The WUS configuration information contained in the first information may include at least one of the following:
1) WUS synchronization reference configuration information, which may include at least one of the following:
   at least one of an SSB, a channel state information-reference signal (Channel State Information-Reference Signal, CSI-RS), or a tracking reference signal (tracking reference signal, TRS) of the first access object; and
   GPS timing (GPS timing).
2) WUS resource configuration information, which may include at least one of the following:
   time domain resource information;
   frequency domain resource information; and
   signal sequence configuration information, such as preamble grouping, which may indicate a preamble group index indicating that preambles in this group are used to trigger an SSB of the at least one second access object.
3) WUS power configuration information, which may include at least one of the following:
   initial signal power; and
   signal power ramp-up step size.
4) WUS repetition configuration information, which may include at least one of the following:
   repetition count for a single signal transmission; and
   maximum repetition count for channel transmission.
5) WUS spatial domain parameter configuration information, which may include at least one of the following:
   a correspondence between a WUS and an SSB of the first access object;
   a correspondence between a WUS and an SSB of the at least one second access object; and
   a correspondence between a WUS and an SSB of the second access object group.
6) WUS transmission timer (timer) configuration information, where the timer is used to prevent the WUS from being transmitted too frequently; and typically, the timer is started upon completion of the WUS transmission, and repeated transmission of the WUS is not allowed until the timer expires.

A form of the WUS signal includes at least one of the following:
RACH;
Msg1;
preamble sequence (preamble);
sounding reference signal (Sounding Reference Signal, SRS); and
physical uplink control channel (Physical Uplink Control Channel, PUCCH).

A configuration method for the WUS resource configuration information includes at least one of the following:
configuring a signal resource list in the first information, where each element in the signal resource list is in a one-to-one correspondence with an index size of the second access object or the second access object group, and one element in the signal resource list includes one or more resources;
configuring a signal resource list in the first information, where each element in the signal resource list explicitly corresponds to an index of the second access object or the second access object group;
configuring a candidate resource set in the first information, where one or more resources in the candidate resource set correspond to one resource number, one resource number corresponds to an index of one second access object or one second access object group, and the resource number is determined according to at least one of time domain, frequency domain, or space domain; and
configuring one or more signal resources for the second access object or the second access object group in the first information.

The signal resources configured by the WUS resource configuration information include at least one of the following:
time-frequency resources are the same as time-frequency resources of a common RACH on the first access object or the second access object group; that is, same time-frequency resources are shared with the common RACH on the first access object;
time-frequency resources are time-frequency resources of a dedicated RACH specifically used to trigger SSB/SIB transmission and/or RACH monitoring on the first access object or the second access object group, where the time-frequency resources of the dedicated RACH may be time-frequency resources completely different from the time-frequency resources of the common RACH on the first access object, or may be a portion of the time-frequency resources of the common RACH on the first access object; and
time-frequency resources are time-frequency resources of a dedicated SRS/PUCCH used to trigger SSB/SIB transmission and/or RACH monitoring on the first access object or the second access object group.

A grouping method for the second access object group includes at least one of the following:
configured by the network-side device; and
specified by the protocol.

A grouping rule for the second access object group includes at least one of the following:
second access objects within a same frequency band (band) form a group;
second access objects within a same frequency band interval form a group;
second access objects for which at least one of an initial BWP (Initial BWP), an active BWP (active BWP), an SSB, or an SCS is the same form a group;
second access objects with a same transmission mode form a group, where the transmission mode is related to at least one of whether to transmit an SSB, whether to perform RACH monitoring, whether transmission of an on-demand SSB (on-demand SSB) is supported, or the like;
second access objects that are co-located form a group; and
second access objects with a consistent SSB transmission periodicity form a group.

Regarding how the terminal selects the target access object to perform the first operation from the first access object and the second access object group based on the first information, refer to the embodiment shown in FIG. 2, which will not be repeated here.

It should be noted that the apparatus shown in FIG. 13 can implement the method shown in FIG. 8 and achieve the same technical effects, and therefore is relatively briefly described. For related parts, refer to the foregoing descriptions of the embodiment shown in FIG. 8.

Optionally, the communication apparatus 1300 provided in this embodiment of this application may further include:
a first WUS receiving module, configured to receive, by the target access object, a wake-up signal WUS, in the following case: the target access object belongs to the second access object group, the first information includes the WUS configuration information that triggers the SSB/SIB transmission on the at least one second access object, or the WUS configuration information that triggers the SSB/SIB adaptation for the at least one second access object, and the first information includes the WUS configuration information that triggers the random access channel RACH monitoring for the at least one second access object, or the WUS configuration information that triggers the RACH monitoring adaptation for the at least one second access object, where the WUS is used to trigger at least one of SSB transmission, SIB transmission, or RACH monitoring on the target access object.

In an example, the target access object receives the wake-up signal WUS, and the WUS is transmitted by the terminal in the case that a first condition is satisfied.

The first condition may include at least one of the following:
1) the first access object being not a suitable cell;
2) the target access object being a suitable cell;
3) intra-frequency (intra-frequency) or inter-frequency (inter-frequency) measurement being performed on the target access object;
4) the target access object being in a first energy-saving state, where the first energy-saving state includes at least one of no SSB transmission, no SIB transmission, no RACH monitoring, transmitting an energy-saving SSB (such as a sparse SSB), transmitting an energy-saving SIB (such as a sparse SIB), or energy-saving RACH monitoring (such as sparse RACH monitoring), and the energy-saving SSB includes one of a light SSB, a reduced SSB, a sparse SSB, or a long-periodicity SSB;
5) the terminal being sensitive to an access delay; and
6) the terminal being in a process of link failure recovery.

In another example, the wake-up signal WUS for the target access object is transmitted by the terminal in the case that the target access object is assumed to be in a second energy-saving state.

The second energy-saving state may include at least one of the following:
no SIB transmission, normal SSB transmission, and normal RACH monitoring;
no SIB transmission, no SSB transmission or transmitting an energy-saving SSB (for example, a reduced SSB or a sparse SSB), using the first access object as a reference, and normal RACH monitoring;
no SIB transmission, normal SSB transmission, and not performing normal RACH monitoring;
no SIB transmission, no SSB transmission or transmitting an energy-saving SSB (for example, a reduced SSB or a sparse SSB), and not performing normal RACH monitoring;
transmitting an SIB, normal SSB transmission, and not performing normal RACH monitoring;
transmitting an SIB, no SSB transmission or transmitting an energy-saving SSB, and not performing normal RACH monitoring;
transmitting an SIB, normal SSB transmission, and normal RACH monitoring; and
transmitting an SIB, no SSB transmission or transmitting an energy-saving SSB, and normal RACH monitoring.

The energy-saving SSB includes one of a light SSB, a reduced SSB, a sparse SSB, or a long-periodicity SSB.

In a first example, the first WUS receiving module is configured to receive, by the target access object, one WUS, where the WUS may be used for two purposes: triggering SSB transmission and/or SIB transmission on the target access object, and triggering RACH monitoring on the target access object.

In a second example, the first WUS receiving module is configured to receive, by the target access object, a first WUS for the target access object, where the first WUS is used to trigger SSB transmission and/or SIB transmission on the target access object; and receive, by the target access object, a second WUS for the target access object, where the second WUS is used to trigger RACH monitoring on the target access object.

For example, the first WUS receiving module is configured to perform one of the following:
receiving, by the target access object, the second WUS for the target access object that the terminal starts to transmit after Z slots/symbols/milliseconds from the transmission of the first WUS;
receiving, by the target access object, the second WUS for the target access object that the terminal starts to transmit after X slots/symbols/milliseconds from the reception of feedback for the first WUS;
receiving, by the target access object, the second WUS for the target access object that the terminal starts to transmit after Y slots/symbols/milliseconds from the reception of a first SSB or a first SIB transmitted on the target access object in response to successful triggering;
receiving, by the target access object, the second WUS for the target access object that the terminal transmits when the number of transmissions of the first WUS reaches a maximum value; and
receiving, by the target access object, the second WUS for the target access object that the terminal transmits upon the expiry of a first timer, where the first timer is started upon the transmission of the first WUS.

According to the communication apparatus 1300 provided in this embodiment, the SSB transmission or the RACH monitoring on the second access object can be triggered on-demand (on-demand), instead of continuous SSB transmission or continuous RACH monitoring, or instead of no SSB transmission or no RACH monitoring. Therefore, the network-side capacity can be maximized as much as possible while saving energy for the network-side device.

Optionally, the communication apparatus 1300 provided in this embodiment of this application may further include a signal transmitting module, configured to transmit, by the target access object, an SSB/SIB in the case that the WUS is used to trigger the SSB/SIB transmission on the target access object. In this way, the SSB/SIB is transmitted on-demand on the target access object when triggered by the WUS, thereby preparing the UE to access the target access object and increasing the network-side capacity.

Optionally, the communication apparatus 1300 provided in this embodiment of this application may further include an operation receiving module, configured to monitor the first operation initiated by the terminal for the target access object.

Optionally, the communication apparatus 1300 provided in this embodiment of this application may further include a second WUS transmitting module, configured to re-transmit the wake-up signal WUS for the target access object in the case that a second condition is satisfied, to increase a success rate of the first operation.

The second condition may include, but is not limited to, at least one of the following:
1) SSB detection fails;
2) the maximum count for random access is reached, where
   the number of transmissions of the WUS is less than or equal to a preset maximum number of transmissions;
3) No feedback for the previous WUS is received;
4) The previous WUS is used to trigger SSB/SIB transmission, and after the reception of the feedback for the previous WUS signal, the WUS used to trigger RACH monitoring is re-transmitted (that is, the WUS is re-transmitted to trigger RACH monitoring); and
5) No feedback for the previous WUS is received before the timer expires.

Optionally, the WUS signal re-transmitted has at least one of the following characteristics:
1) increased signal power;
2) a transmission time interval with the previous WUS being greater than a preset time interval; and
3) the frequency domain resource and sequence resource being the same as those for the previous WUS.

It should be noted that, the communication apparatus in embodiments of this application may be an electronic device, for example, an electronic device with an operating system, or may be a component such as an integrated circuit or a chip in the electronic device. The electronic device may be a terminal, or may be another device different from a terminal. For example, the terminal may include, but is not limited to, the foregoing listed types of the terminal 11. The another device may be a server, a network attached storage (Network Attached Storage, NAS), or the like. This is not specifically limited in embodiments of this application.

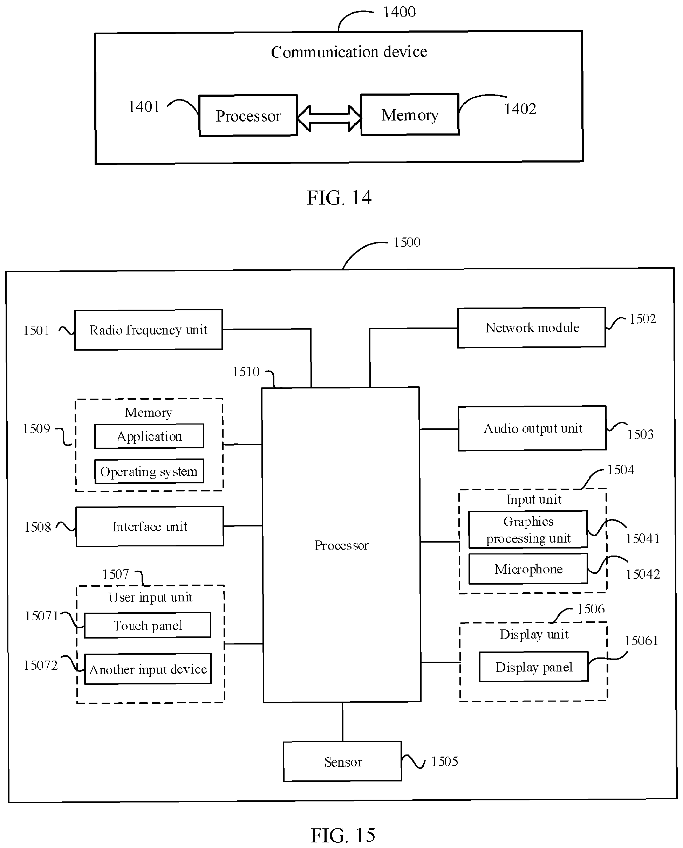

Optionally, as shown in FIG. 14, an embodiment of this application further provides a communication device 1400, including a processor 1401 and a memory 1402. The memory 1402 has stored thereon a program or instructions executable on the processor 1401. For example, when the communication device 1400 is a terminal, the program or the instructions, when executed by the processor 1401, implement the steps of the foregoing random access method embodiment and can achieve the same technical effects. When the communication device 1400 is a network-side device, the program or the instructions, when executed by the processor 1401, implement the steps of the foregoing communication method embodiment and can achieve the same technical effects. To avoid repetition, details are not described herein again.

An embodiment of this application further provides a terminal. The terminal includes a processor and a communication interface, where the communication interface is configured to receive first information about a second access object group transmitted by a network-side device via a first access object, where the second access object group includes one or more second access objects different from the first access object; and the processor is configured to select a target access object to perform a first operation from the first access object and the second access object group based on the first information and a first rule, where the first operation includes camping or random access, and the access object includes one of a carrier, a cell, or a bandwidth part BWP. The terminal embodiment corresponds to the foregoing terminal-side method embodiment. The implementation processes and implementations of the foregoing method embodiment are applicable to the terminal embodiment and can achieve the same technical effects. In an example embodiment, FIG. 15 is a schematic diagram of a hardware structure of a terminal according to an embodiment of this application.

The terminal 1500 includes but is not limited to at least some components in a radio frequency unit 1501, a network module 1502, an audio output unit 1503, an input unit 1504, a sensor 1505, a display unit 1506, a user input unit 1507, an interface unit 1508, a memory 1509, and a processor 1510.

A person skilled in the art may understand that the terminal 1500 may further include a power supply (for example, a battery) that supplies power to each component. The power supply may be logically connected to the processor 1510 via a power management system, so as to implement functions such as charging management, discharging management, and power consumption management via the power management system. The structure of the terminal shown in FIG. 15 does not constitute a limitation on the terminal. The terminal may include more or fewer components than those shown in the figure, or combine some components, or have different component arrangements. Details are not described herein again.

It should be understood that in this embodiment of this application, the input unit 1504 may include a graphics processing unit (Graphics Processing Unit, GPU) 15041 and a microphone 15042. The graphics processing unit 15041 processes image data of a still picture or a video obtained by an image capture apparatus (for example, a camera) in a video capture mode or an image capture mode. The display unit 1506 may include a display panel 15061, and the display panel 15061 may be configured in a form of a liquid crystal display, an organic light-emitting diode, or the like. The user input unit 1507 includes at least one of a touch panel 15071 and another input device 15072. The touch panel 15071 is also referred to as a touchscreen. The touch panel 15071 may include two parts: a touch detection apparatus and a touch controller. The another input device 15072 may include but is not limited to a physical keyboard, a function key (such as a volume control key or an on/off key), a trackball, a mouse, and a joystick. Details are not described herein again.

In this embodiment of this application, after receiving downlink data from a network-side device, the radio frequency unit 1501 may transmit the downlink data to the processor 1510 for processing. In addition, the radio frequency unit 1501 may transmit uplink data to the network-side device. Generally, the radio frequency unit 1501 includes but is not limited to an antenna, an amplifier, a transceiver, a coupler, a low-noise amplifier, a duplexer, and the like.

The memory 1509 may be configured to store a software program or instructions and various types of data. The memory 1509 may mainly include a first storage area for storing a program or instructions and a second storage area for storing data. The first storage area may store an operating system, an application or instructions required by at least one function (for example, a sound playback function or an image playback function), and the like. In addition, the memory 1509 may include a volatile memory or a non-volatile memory, or the memory 1509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1509 in this embodiment of this application includes but is not limited to these memories and any other suitable type of memory.

The processor 1510 may include one or more processing units. Optionally, the processor 1510 integrates an application processor and a modem processor. The application processor mainly processes operations related to an operating system, a user interface, an application program, and the like. The modem processor, for example, a baseband processor, mainly processes a wireless communication signal. It may be understood that the foregoing modem processor may not be integrated into the processor 1510.

The radio frequency unit 1501 may be configured to receive first information about a second access object group transmitted by a network-side device via a first access object, where the second access object group includes one or more second access objects different from the first access object.

The processor 1510 may be configured to select a target access object to perform a first operation from the first access object and the second access object group based on the first information and a first rule, where the first operation includes camping or random access, and the access object includes one of a carrier, a cell, or a bandwidth part BWP.

In embodiments of this application, the terminal 1500 can select a target access object to perform camping or random access from the first access object and the second access object group based on the first rule and the first information about the second access object group provided by the network-side device to the terminal via the first access object, eliminating the need for continuous transmission of information such as an SSB and SIB on the second access object. Therefore, the network-side capacity can be maximized as much as possible while saving energy on the network side.

An embodiment of this application further provides a network-side device. The network-side device includes a processor and a communication interface, where the communication interface is configured to transmit first information about a second access object group to a terminal via a first access object, where the second access object group includes one or more second access objects different from the first access object, and the first information is used for the terminal to select a target access object to perform a first operation, where the first operation includes camping or random access, and the access object includes one of a carrier, a cell, or a bandwidth part BWP. The network-side device embodiment corresponds to the foregoing network-side device method embodiment. The implementation processes and implementations of the foregoing method embodiment are applicable to the network-side device embodiment and can achieve the same technical effects.

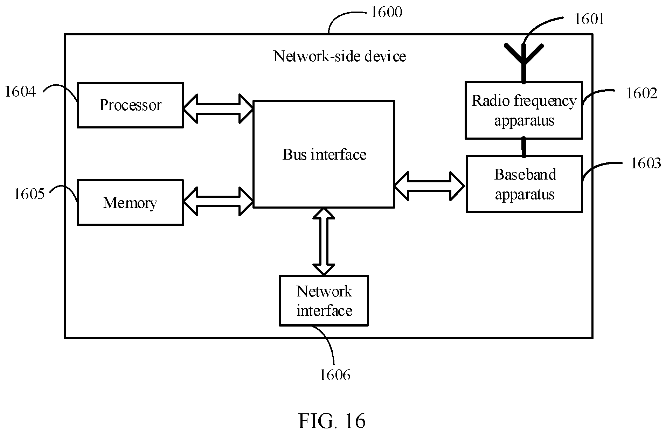

In an example embodiment of this application, an embodiment of this application further provides a network-side device. As shown in FIG. 16, the network-side device 1600 includes an antenna 1601, a radio frequency apparatus 1602, a baseband apparatus 1603, a processor 1604, and a memory 1605. The antenna 1601 is connected to the radio frequency apparatus 1602. In an uplink direction, the radio frequency apparatus 1602 receives information via the antenna 1601, and transmits the received information to the baseband apparatus 1603 for processing. In a downlink direction, the baseband apparatus 1603 processes information to be transmitted, and transmits the processed information to the radio frequency apparatus 1602. After processing the received information, the radio frequency apparatus 1602 transmits the processed information via the antenna 1601.

The method performed by a network-side device in the foregoing embodiment may be implemented in the baseband apparatus 1603. The baseband apparatus 1603 includes a baseband processor.

For example, the baseband apparatus 1603 may include at least one baseband board. A plurality of chips are disposed on the baseband board. As shown in FIG. 16, one of the chips is, for example, the baseband processor, and is connected to the memory 1605 via a bus interface, to invoke a program in the memory 1605 to perform an operation of a network device shown in the foregoing method embodiment.

The network-side device may further include a network interface 1606. For example, the interface is a common public radio interface (common public radio interface, CPRI).

In an example embodiment, the network-side device 16000 in this embodiment of this application further includes instructions or a program stored on the memory 1605 and executable on the processor 1604. The processor 1604 invokes the instructions or the program in the memory 1605 to perform the method performed by the modules shown in FIG. 13, and the same technical effects are achieved. To avoid repetition, details are not described herein again.

An embodiment of this application further provides a readable storage medium. The readable storage medium has a program or instructions stored thereon. The program or the instructions, when executed by a processor, implement the processes of the foregoing random access method embodiment, and the same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to execute a program or instructions to implement the processes of the foregoing random access method or communication method embodiment, and the same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a non-volatile storage medium, and the computer program/program product is executed by at least one processor to implement the processes of the foregoing random access method or communication method embodiment, and the same technical effects can be achieved. To avoid repetition, details are not described herein again.

An embodiment of this application further provides a communication system, including a terminal and a network-side device, where the terminal may be configured to perform the steps of the random access method as described in FIG. 2, and the network-side device may be configured to perform the steps of the communication method as described in FIG. 8.

It should be noted that in the specification, the term "include", "comprise", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and can further include performing functions in a basically simultaneous manner or in a reverse order based on the functions involved. For example, the described method can be performed in an order different from the order described, and various steps may be added, omitted, or combined. In addition, features described with reference to some examples may be combined in other examples.

According to the foregoing descriptions of the implementations, a person skilled in the art can clearly understand that the method in the foregoing embodiments may be implemented by software and a necessary general-purpose hardware platform, or certainly can be implemented by hardware. However, in many cases, the former is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the methods described in embodiments of this application.

The foregoing describes embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the scope of protection of the claims, and all such manners fall within the scope of protection of this application.

## Claims

1. A random access method, comprising:
receiving, by a terminal, first information about a second access object group transmitted by a network-side device via a first access object, wherein the second access object group comprises one or more second access objects different from the first access object; and
selecting, by the terminal, a target access object to perform a first operation from the first access object and the second access object group based on the first information and a first rule, wherein the first operation comprises camping or random access, and the access object comprises one of a carrier, a cell, or a bandwidth part BWP.

2. The method according to claim 1, wherein the first information corresponds to at least one second access object in the second access object group, and the first information comprises at least one of the following:
wake-up signal WUS configuration information that triggers SSB transmission on the at least one second access object, or WUS configuration information that triggers SSB adaptation for the at least one second access object, wherein the SSB comprises at least one of a synchronization signal block or a physical broadcast channel block;
WUS configuration information that triggers SIB transmission on the at least one second access object, or WUS configuration information that triggers SIB adaptation for the at least one second access object;
WUS configuration information that triggers random access channel RACH monitoring for the at least one second access object, or WUS configuration information that triggers RACH monitoring adaptation for the at least one second access object;
relevant configuration information of an SSB currently transmitted on the at least one second access object;
relevant configuration information of an SIB currently transmitted on the at least one second access object;
relevant configuration information of a RACH monitoring behavior currently occurring on the at least one second access object;
relevant configuration information of an SSB transmitted after successful triggering by a WUS;
relevant configuration information of an SIB transmitted after successful triggering by a WUS;
relevant configuration information of RACH monitoring after successful triggering by a WUS; and
characteristic information of the at least one second access object.

3. The method according to claim 1, wherein the first rule is related to at least one of the following:
one or more access objects that are indicated or configured by the network-side device and that can be randomly accessed by the terminal;
an access object to be randomly accessed by the terminal being the first access object by default;
barring status information of the second access object;
an index value of the second access object;
a center frequency of the second access object;
a subcarrier spacing SCS of the second access object;
an identifier of the second access object;
a frequency interval between the second access object and the first access object;
whether normal RACH monitoring is performed on the second access object;
whether normal SSB transmission is performed on the second access object;
whether normal SIB transmission is performed on the second access object;
whether at least two of normal RACH monitoring, normal SSB transmission, or normal SIB transmission being performed on the second access object are satisfied;
a number of required WUS transmissions to the second access object;
a priority of the second access object;
a measurement value of signal strength of a reference signal of the second access object, wherein the signal strength comprises at least one of a reference signal received power RSRP or a signal-to-interference-plus-noise ratio SINR;
a randomly generated access object index;
a weight value of the second access object;
a randomly generated access object weight value;
whether the first access object is a suitable cell; and
whether the second access object is a suitable cell.

4. The method according to claim 1, wherein selecting the target access object to perform the first operation from the first access object and the second access object group based on the first information and the first rule comprises:
determining whether the first access object is a suitable cell; and
in the case that the first access object is a suitable cell, selecting the first access object as the target access object; or
in the case that the first access object is not a suitable cell, performing one of a first step, a second step, or a third step,
wherein the first step comprises:
determining whether the at least one second access object is a suitable cell, based on a reference signal measurement result corresponding to the at least one second access object in the second access object group and a system information block SIB transmitted on the at least one second access object in response to triggering by a WUS; and
in the case that one or more of the at least one second access object are suitable cells, selecting, according to the first rule, a suitable cell from the at least one second access object as the target access object to perform the first operation;
wherein the second step comprises:
determining whether the at least one second access object is a suitable cell, based on a reference signal measurement result corresponding to the at least one second access object in the second access object group and a partial SIB of the at least one second access object comprised in the first information; and
in the case that one or more of the at least one second access object are suitable cells, selecting, according to the first rule, a suitable cell from the at least one second access object, and in the case that the terminal does not obtain an SIB of the suitable cell, transmitting, to the suitable cell, a WUS that triggers SIB transmission, and after receiving the SIB, using the suitable cell as the target access object to perform the first operation; and
wherein the third step comprises:
ignoring the second access object and searching for another suitable cell as the target access object to perform the operation.

5. The method according to claim 1, wherein selecting the target access object to perform the first operation from the first access object and the second access object group based on the first information and the first rule comprises:
performing a fourth step or a fifth step,
wherein the fourth step comprises:
determining whether the first access object is a suitable cell, based on a reference signal measurement result of the first access object and a system information block SIB of the first access object;
determining whether the at least one second access object is a suitable cell, based on a reference signal measurement result of the at least one second access object in the second access object group and a partial SIB of the at least one second access object comprised in the first information;
in the case that the first access object is a suitable cell, and that one or more of the at least one second access object are suitable cells, selecting a suitable cell from the first access object and the at least one second access object according to the first rule; and
if the suitable cell is the first access object, using the suitable cell as the target access object to perform the first operation; or
if the suitable cell is the second access object, transmitting, to the suitable cell, a WUS that triggers SIB transmission, and after receiving the SIB, using the suitable cell as the target access object to perform the first operation; and
wherein the fifth step comprises:
determining whether the first access object is a suitable cell, based on a reference signal measurement result of the first access object and an SIB of the first access object;
determining whether the at least one second access object is a suitable cell, based on a reference signal measurement result of the at least one second access object in the second access object group and an SIB transmitted on the at least one second access object in response to triggering by a WUS; and
in the case that the first access object is a suitable cell, and that one or more of the at least one second access object are suitable cells, selecting, according to the first rule, a suitable cell from the first access object and the at least one second access object as the target access object to perform the first operation.

6. The method according to claim 2, wherein the target access object belongs to the second access object group, the first information comprises the WUS configuration information that triggers the SSB/SIB transmission on the at least one second access object, or the WUS configuration information that triggers the SSB/SIB adaptation for the at least one second access object, and the first information comprises the WUS configuration information that triggers the random access channel RACH monitoring for the at least one second access object, or the WUS configuration information that triggers the RACH monitoring adaptation for the at least one second access object; and the method further comprises:
transmitting, by the terminal, a WUS for the target access object in the case that a first condition is satisfied, wherein the WUS is used to trigger at least one of SSB transmission, SIB transmission, or RACH monitoring on the target access object,
wherein the first condition comprises at least one of the following:
the first access object being not a suitable cell;
the target access object being a suitable cell;
intra-frequency or inter-frequency measurement being performed on the target access object;
the target access object being in a first energy-saving state, wherein the first energy-saving state comprises at least one of no SSB transmission, no SIB transmission, no RACH monitoring, transmitting an energy-saving SSB, transmitting an energy-saving SIB, or energy-saving RACH monitoring, and the energy-saving SSB comprises one of a light SSB, a reduced SSB, a sparse SSB, or a long-periodicity SSB;
the terminal being sensitive to an access delay; and
the terminal being in a process of link failure recovery.

7. The method according to claim 6, wherein transmitting the WUS for the target access object comprises:
transmitting a first WUS for the target access object, wherein the first WUS is used to trigger SSB transmission and/or SIB transmission on the target access object; and
transmitting a second WUS for the target access object, wherein the second WUS is used to trigger RACH monitoring on the target access object.

8. The method according to claim 7, wherein the WUS is used to trigger the SSB/SIB transmission on the target access object, and the method further comprises:
monitoring and receiving, by the terminal, an SSB/SIB transmitted on the target access object.

9. The method according to claim 8, wherein monitoring and receiving, by the terminal, the SSB/SIB transmitted on the target access object comprises one of the following:
starting a third timer upon completion of the WUS transmission, and starting, by the terminal upon the expiry of the third timer, the monitoring and receiving of the SSB/SIB transmitted on the target access object;
starting, by the terminal after C slots/symbols/milliseconds from the completion of the WUS transmission, the monitoring and receiving of the SSB/SIB transmitted on the target access object;
starting, by the terminal in a next slot after the WUS transmission, the monitoring and receiving of the SSB/SIB transmitted on the target access object; and
monitoring, by the terminal within an SSB monitoring window configured in the first information, the SSB transmitted on the target access object, and/or receiving, within an SIB monitoring window configured in the first information, the SIB transmitted on the target access object.

10. The method according to claim 8, further comprising:
initiating, by the terminal, the first operation to the target access object,
wherein the target access object is one second access object, and initiating the first operation to the target access object comprises one of the following:
starting a second timer upon the WUS transmission to the target access object, and initiating, by the terminal upon the expiry of the second timer, the first operation to the target access object;
initiating, by the terminal after A slots/symbols/milliseconds from the WUS transmission to the target access object, the first operation to the target access object; and
initiating, by the terminal after B slots/symbols/milliseconds from the reception of feedback for the WUS for the target access object, the first operation to the target access object.

11. A communication method, comprising:
transmitting, by a network-side device, first information about a second access object group to a terminal via a first access object, wherein the second access object group comprises one or more second access objects different from the first access object, and the first information is used for the terminal to select a target access object to perform a first operation, wherein the first operation comprises camping or random access, and the access object comprises one of a carrier, a cell, or a bandwidth part BWP.

12. The method according to claim 11, wherein the first information corresponds to at least one second access object in the second access object group, and the first information comprises at least one of the following:
wake-up signal WUS configuration information that triggers SSB transmission on the at least one second access object, or WUS configuration information that triggers SSB adaptation for the at least one second access object, wherein the SSB comprises at least one of a synchronization signal block or a physical broadcast channel block;
WUS configuration information that triggers SIB transmission on the at least one second access object, or WUS configuration information that triggers SIB adaptation for the at least one second access object;
WUS configuration information that triggers random access channel RACH monitoring for the at least one second access object, or WUS configuration information that triggers RACH monitoring adaptation for the at least one second access object;
relevant configuration information of an SSB currently transmitted on the at least one second access object;
relevant configuration information of an SIB currently transmitted on the at least one second access object;
relevant configuration information of a RACH monitoring behavior currently occurring on the at least one second access object;
relevant configuration information of an SSB transmitted after successful triggering by a WUS;
relevant configuration information of an SIB transmitted after successful triggering by a WUS;
relevant configuration information of RACH monitoring after successful triggering by a WUS; and
characteristic information of the at least one second access object.

13. The method according to claim 12, wherein the target access object belongs to the second access object group, the first information comprises the WUS configuration information that triggers the SSB/SIB transmission on the at least one second access object, or the WUS configuration information that triggers the SSB/SIB adaptation for the at least one second access object, and the first information comprises the WUS configuration information that triggers the random access channel RACH monitoring for the at least one second access object, or the WUS configuration information that triggers the RACH monitoring adaptation for the at least one second access object; and the method further comprises:
receiving, by the target access object, a wake-up signal WUS, wherein the WUS is transmitted by the terminal in the case that a first condition is satisfied, and the WUS is used to trigger at least one of SSB transmission, SIB transmission, or RACH monitoring on the target access object, wherein the first condition comprises at least one of the following:
the first access object being not a suitable cell;
the target access object being a suitable cell;
intra-frequency or inter-frequency measurement being performed on the target access object;
the target access object being in a first energy-saving state, wherein the first energy-saving state comprises at least one of no SSB transmission, no SIB transmission, no RACH monitoring, transmitting an energy-saving SSB, transmitting an energy-saving SIB, or energy-saving RACH monitoring, and the energy-saving SSB comprises one of a light SSB, a reduced SSB, a sparse SSB, or a long-periodicity SSB;
the terminal being sensitive to an access delay; and
the terminal being in a process of link failure recovery.

14. The method according to claim 13, wherein receiving, by the target access object, the wake-up signal WUS comprises:
receiving, by the target access object, a first WUS, wherein the first WUS is used to trigger SSB transmission and/or SIB transmission on the target access object; and
receiving, by the target access object, a second WUS, wherein the second WUS is used to trigger RACH monitoring on the target access object.

15. A random access apparatus, comprising:
an information receiving module, configured to receive first information about a second access object group transmitted by a network-side device via a first access object, wherein the second access object group comprises one or more second access objects different from the first access object; and
an access object selection module, configured to select a target access object to perform a first operation from the first access object and the second access object group based on the first information and a first rule, wherein the first operation comprises camping or random access, and the access object comprises one of a carrier, a cell, or a bandwidth part BWP.

16. The apparatus according to claim 15, wherein the first information corresponds to at least one second access object in the second access object group, and the first information comprises at least one of the following:
wake-up signal WUS configuration information that triggers SSB transmission on the at least one second access object, or WUS configuration information that triggers SSB adaptation for the at least one second access object, wherein the SSB comprises at least one of a synchronization signal block or a physical broadcast channel block;
WUS configuration information that triggers SIB transmission on the at least one second access object, or WUS configuration information that triggers SIB adaptation for the at least one second access object;
WUS configuration information that triggers random access channel RACH monitoring for the at least one second access object, or WUS configuration information that triggers RACH monitoring adaptation for the at least one second access object;
relevant configuration information of an SSB currently transmitted on the at least one second access object;
relevant configuration information of an SIB currently transmitted on the at least one second access object;
relevant configuration information of a RACH monitoring behavior currently occurring on the at least one second access object;
relevant configuration information of an SSB transmitted after successful triggering by a WUS;
relevant configuration information of an SIB transmitted after successful triggering by a WUS;
relevant configuration information of RACH monitoring after successful triggering by a WUS; and
characteristic information of the at least one second access object.

17. The apparatus according to claim 15, wherein the first rule is related to at least one of the following:
one or more access objects that are indicated or configured by the network-side device and that can be randomly accessed by a terminal;
an access object to be randomly accessed by the terminal being the first access object by default;
barring status information of the second access object;
an index value of the second access object;
a center frequency of the second access object;
a subcarrier spacing SCS of the second access object;
an identifier of the second access object;
a frequency interval between the second access object and the first access object;
whether normal RACH monitoring is performed on the second access object;
whether normal SSB transmission is performed on the second access object;
whether normal SIB transmission is performed on the second access object;
whether at least two of normal RACH monitoring, normal SSB transmission, or normal SIB transmission being performed on the second access object are satisfied;
a number of required WUS transmissions to the second access object;
a priority of the second access object;
a measurement value of signal strength of a reference signal of the second access object, wherein the signal strength comprises at least one of a reference signal received power RSRP or a signal-to-interference-plus-noise ratio SINR;
a randomly generated access object index;
a weight value of the second access object;
a randomly generated access object weight value;
whether the first access object is a suitable cell; and
whether the second access object is a suitable cell.

18. A communication apparatus, comprising:
an information transmitting module, configured to transmit first information about a second access object group to a terminal via a first access object, wherein the second access object group comprises one or more second access objects different from the first access object, and the first information is used for the terminal to select a target access object to perform a first operation, wherein the first operation comprises camping or random access, and the access object comprises one of a carrier, a cell, or a bandwidth part BWP.

19. The apparatus according to claim 18, wherein the first information corresponds to at least one second access object in the second access object group, and the first information comprises at least one of the following:
wake-up signal WUS configuration information that triggers SSB transmission on the at least one second access object, or WUS configuration information that triggers SSB adaptation for the at least one second access object, wherein the SSB comprises at least one of a synchronization signal block or a physical broadcast channel block;
WUS configuration information that triggers SIB transmission on the at least one second access object, or WUS configuration information that triggers SIB adaptation for the at least one second access object;
WUS configuration information that triggers random access channel RACH monitoring for the at least one second access object, or WUS configuration information that triggers RACH monitoring adaptation for the at least one second access object;
relevant configuration information of an SSB currently transmitted on the at least one second access object;
relevant configuration information of an SIB currently transmitted on the at least one second access object;
relevant configuration information of a RACH monitoring behavior currently occurring on the at least one second access object;
relevant configuration information of an SSB transmitted after successful triggering by a WUS;
relevant configuration information of an SIB transmitted after successful triggering by a WUS;
relevant configuration information of RACH monitoring after successful triggering by a WUS; and
characteristic information of the at least one second access object.

20. A terminal, comprising a processor and a memory, wherein the memory stores a program or instructions executable on the processor, and the program or the instructions, when executed by the processor, implement the steps of the random access method according to any one of claims 1 to 10.

21. A network-side device, comprising a processor and a memory, wherein the memory stores a program or instructions executable on the processor, and the program or the instructions, when executed by the processor, implement the steps of the communication method according to any one of claims 11 to 14.

22. A readable storage medium having a program or instructions stored thereon, wherein the program or the instructions, when executed by a processor, implement the steps of the random access method according to any one of claims 1 to 10 or the communication method according to any one of claims 11 to 14.
